# EUROPEAN PATENT SPECIFICATION

(11) **EP 4 047 118 B1**
(45) Date of publication and mention of the grant of the patent: **25.12.2024**
(21) Application number: 20877790.4
(22) Date of filing: 12.10.2020
(51) Int. Cl.: D06F 34/26, D06F 58/38, D06F 58/46, D06F 58/48, D06F 58/26, D06F 29/00, D06F 31/00, D06F 105/32, D06F 103/34, D06F 58/02, D06F 58/20

(54) **INTEGRATED LAUNDRY PROCESSING APPARATUS AND CONTROL METHOD THEREOF**
INTEGRIERTE WÄSCHEVERARBEITUNGSVORRICHTUNG UND DEREN STEUERUNGSVERFAHREN
APPAREIL DE TRAITEMENT DE LINGE INTÉGRÉ ET PROCÉDÉ DE COMMANDE ASSOCIÉ

(30) Priority: 18.10.2019 KR 20190129863
(43) Date of publication of application: 24.08.2022
(73) Proprietor: LG Electronics Inc., SEOUL 07336 (KR)
(72) Inventor: LEE, Dongsoo, Seoul 08592 (KR); KIM, Taewoong, Seoul 08592 (KR); KANG, Hyemin, Seoul 08592 (KR)
(74) Representative: Vossius & Partner Patentanwälte Rechtsanwälte mbB
(86) International application number: PCT/KR2020/013872
(87) International publication number: WO 2021/075811

(56) References cited:
- WO-A1-2007/111413
- WO-A1-2019/134478
- CN-A- 1 500 932
- CN-A- 102 758 342
- CN-U- 208 562 910
- JP-A- 2008 307 151
- JP-A- H08 173 694
- KR-A- 20060 038 796

## Description

The present invention relates to an integrated laundry treatment apparatus and a method of controlling the same, and more particularly, to an integrated laundry treatment apparatus, in which a washing machine module configured to perform a washing process and a drying machine module configured to perform a drying process are disposed in a common cabinet, and a method of controlling the same.

In general, a washing machine, as a laundry treatment apparatus, refers to an apparatus configured to wash laundry and including a drum disposed in a cabinet and configured to be rotatable, and a drive device configured to rotate the drum. The washing machines are classified into a top-loading type washing machine and a front-loading type washing machine depending on a posture of the drum.

The front-loading washing machine has a laid drum unlike the top-loading washing machine having an upright drum. Therefore, the laundry is loaded into the front-loading washing machine through a front portion of the washing machine. The front-loading washing machine has a smaller size and a larger washing capacity than the top-loading washing machine. In addition, because the front-loading washing machine has high washing performance and does not cause a tangle of laundry, the front-loading washing machine is widely used.

In addition, a combo-type drying-washing machine, to which a drying function is added by mounting a drying module in the front-loading washing machine, is also widely and commonly used.

However, because the drying module installed in the combo-type drying-washing machine has a limited drying capacity, a significantly large amount of drying time is inevitably required to dry the entire laundry washed completely.

Therefore, to shorten the drying time, as another laundry treatment apparatus, a drying machine, which has been developed only for the purpose of drying the laundry, particularly, a front-loading drying machine similar to the front-loading washing machine, is used together with the combo-type washing machine.

The washing machine and the drying machine may be installed together by being disposed side by side in a horizontal direction. However, there is a problem in that the washing machine and the drying machine occupy an excessively large horizontal area.

Therefore, there have been proposed products in which the washing machine and the drying machine are stacked in a vertical direction, particularly, the drying machine is stacked on the washing machine.

However, in the case of the configuration in which the washing machine and the drying machine are just stacked in the vertical direction as described above, independent functional modules, particularly, the drying modules need to be provided in the washing machine and the drying machine, which excessively increases a height of a product in which the washing machine and the drying machine are stacked. As a result, there occurs a significantly great restriction on a position at which the washing machine and the drying machine are installed together. For example, if the entire position at which the washing machine and the drying machine are stacked is higher than a height of the general home, the washing machine and the drying machine cannot be installed.

In this regard, as a related document, Chinese Patent Application Laid-Open No. 108950976 discloses an integrated laundry treatment apparatus in which a washing machine and a drying machine are assembled by being stacked together in a single cabinet, and the washing machine and the drying machine share some constituent components for implementing functions of a product, thereby reducing an overall size of the product, particularly, an overall height of the product.

The related document discloses a configuration for sharing a drive motor and a drying module which are common components for the washing machine and the drying machine. In particular, the shared drying module includes a common duct, a condenser, a heater, a fan, and a module which are common components for the washing machine and the drying machine. In particular, the shared drying module includes a common duct, a condenser, a heater, a fan, and a motor which are disposed in the common duct, and inlet and outlet valves configured to switch an outlet and an inlet of the common duct.

The related document only discloses that the common drying module may supply hot air to a washing drum and a drying drum by adjusting an inlet valve and an outlet valve to perform drying processes simultaneously in the washing machine and the drying machine, and the common drying module may recover the hot air. However, the related document does not disclose a means for adjusting and controlling the amount of hot air to be supplied to the washing drum and the drying drum while performing the drying processes simultaneously in the washing drum and the drying drum.

Therefore, even though the laundry in any one of the washing drum and the drying drum is completely dried while the drying processes are simultaneously performed in the washing drum and the drying drum, the hot air is inevitably consistently supplied to the drum in which the laundry is completely dried. For this reason, there is a problem in that the laundry is damaged by the hot air or unnecessary electric power consumption is inevitably incurred.

In addition, it is impossible to check a situation in which the drying processes are performed in the washing drum and the drying drum and recognize a dried state of the laundry. For this reason, the hot air needs to be continuously supplied and the drum needs to be operated for a preset drying time, which causes inefficiency in terms of time and electric power consumption.

WO 2019/134478 (A1) relates to a drying system, an integrated washing and drying machine, and a control method therefor.

CN 1 500 932 (A) relates to a tumble dryer washing and drying device.

WO 2007/111413 (A1) to a drum type washing machine having a short time for drying laundry and a drying method thereof.

### [DISCLOSURE]

### [Technical Problem]

The present disclosure has been made in an effort to solve the above-mentioned problems. The present invention is specified by the independent claim. Preferred embodiments are defined by the dependent claims. An object of the present disclosure is to provide an integrated laundry treatment apparatus, in which a washing machine module and a drying machine module are integrally installed in a common cabinet, and a single drying module is provided to produce dry hot air, such that a size of a product may be reduced, a dried state of laundry being dried in a washing drum and a drying and the amount of recovered dry hot air are differently controlled, such that an overall drying process time may be reduced and electric power consumption may be minimized, and the drying processes performed in the drying process and the drying machine of the washing machine are simultaneously completed, such that convenience for a user may be improved, and a method of controlling the same.

### [Technical Solution]

The invention is specified by the independent claim. Preferred embodiments are defined by the dependent claims.

To achieve the above-mentioned object, the present disclosure provides an integrated laundry treatment apparatus including: a cabinet having a common accommodation space therein; a first laundry treatment module disposed at an upper side in the common accommodation space; a second laundry treatment module disposed at a lower side in the common accommodation space; a common drying module configured to produce hot air and supply the hot air to the first laundry treatment module and the second laundry treatment module through a first outlet and a second outlet, the common drying module being configured to absorb at least a part of moisture contained in hot air recovered from the first laundry treatment module and the second laundry treatment module through a first inlet and a second inlet; an outlet flow path switching valve configured to selectively open at least any one of the first outlet and the second outlet or simultaneously open the first outlet and the second outlet; an inlet flow path switching valve configured to selectively open at least any one of the first inlet and the second inlet or simultaneously open the first inlet and the second inlet; a first humidity sensor configured to measure a first humidity of the hot air recovered through the first inlet; a second humidity sensor configured to measure a second humidity of the hot air recovered through the second inlet; and a control unit electrically connected to the first humidity sensor and the second humidity sensor and configured to produce a control signal for operating the outlet flow path switching valve and the inlet flow path switching valve, in which the control unit receives a signal related to the first humidity measured by the first humidity sensor and a signal related to the second humidity measured by the second humidity sensor while the hot air is simultaneously supplied to the first laundry treatment module and the second laundry treatment module, and in which the control unit calculates a difference value between the first humidity and the second humidity, and when the difference value exceeds a predetermined critical value, the control unit operates the outlet flow path switching valve to change opening degrees of the first and second outlets. With this configuration, it is possible to reduce the overall drying process time and minimize the electric power consumption during the simultaneous drying processes. Further, the drying process of the washing machine and the drying process of the drying machine are simultaneously completed, which makes it possible to improve the convenience for the user.

In addition, the integrated laundry treatment apparatus may further include: a hot air supply duct including a first supply duct configured to fluid-connect the first outlet and the first laundry treatment module, and a second supply duct configured to fluid-connect the second outlet and the second laundry treatment module; and a hot air recovery duct including a first recovery duct configured to fluid-connect the first inlet and the first laundry treatment module, a second recovery duct configured to fluid-connect the second inlet and the second laundry treatment module.

In addition, the first humidity sensor may be disposed adjacent to the first inlet and installed in the first recovery duct, and the second humidity sensor may be disposed adjacent to the second inlet and installed in the second recovery duct.

In addition, the common drying module may include: a common duct having a hot air flow path therein and having the first and second inlets and the first and second outlets; a heater and a blower fan disposed in the common duct and configured to produce hot air to be discharged to the first outlet and the second outlet; and a condenser configured to absorb at least a part of moisture contained in the hot air recovered through the first inlet and the second inlet.

In addition, the control unit may compare the first humidity and the second humidity with a predetermined target humidity before calculating the difference value between the first humidity and the second humidity, and calculate the difference value between the humidities when the control unit determines that both the first humidity and the second humidity exceed the target humidity.

In addition, the target humidity may be a relative humidity of 60%.

In addition, the predetermined critical value may be a relative humidity of 10%.

In addition, the integrated laundry treatment apparatus may further include: a first actuator electrically connected to the control unit and configured to operate the outlet flow path switching valve on the basis of the control signal of the control unit; and a second actuator electrically connected to the control unit and configured to operate the inlet flow path switching valve on the basis of the control signal of the control unit.

In addition, the control unit may produce a control signal for increasing the opening degree of the first outlet by a predetermined ratio and decreasing the opening degree of the second outlet by the predetermined ratio when the first humidity is higher than the second humidity, and the control unit may transmit the control signal to the first actuator and the second actuator, and in which the control unit may produce a control signal for increasing the opening degree of the second outlet by the predetermined ratio and decreasing the opening degree of the first outlet by the predetermined ratio when the second humidity is higher than the first humidity, and the control unit may transmit the control signal to the first actuator and the second actuator.

In addition, the control unit may produce a control signal for increasing the opening degree of the first inlet by the predetermined ratio and decreasing the opening degree of the second inlet by the predetermined ratio when the first humidity is higher than the second humidity, and the control unit may transmit the control signal to the first actuator and the second actuator, and in which the control unit may produce a control signal for increasing the opening degree of the second inlet by the predetermined ratio and decreasing the opening degree of the first inlet by the predetermined ratio when the second humidity is higher than the first humidity, and the control unit may transmit the control signal to the first actuator and the second actuator.

The present disclosure provides a method of controlling an integrated laundry treatment apparatus, the method including: a simultaneous drying process step of simultaneously supplying hot air through first and second outlets of a common drying module to first and second laundry treatment modules respectively disposed upper and lower sides in a common accommodation space in a cabinet and absorbing at least a part of moisture contained in hot air recovered through first and second inlets of the common drying module from the first and second laundry treatment modules; a humidity measuring step of measuring a relative humidity of the hot air recovered through the first and second inlets; a humidity difference value determining step of calculating a difference value between the measured humidities and determining whether the calculated difference value exceeds a predetermined critical value; and a flow path opening ratio adjusting step of adjusting a ratio of the hot air to be supplied to the first laundry treatment module and the second laundry treatment module by changing opening degrees of the first and second outlets when the difference value exceeds the predetermined critical value.

In addition, the humidity measuring step may include: a first humidity measuring step of measuring a first humidity of hot air discharged from the first laundry treatment module by using a first humidity sensor disposed adjacent to the first inlet; and a second humidity measuring step of measuring a second humidity of hot air discharged from the second laundry treatment module by using a second humidity sensor disposed adjacent to the second inlet.

In addition, the humidity measuring step may further include a target humidity reach determining step of comparing the first humidity and the second humidity with a predetermined target humidity and determining whether the first humidity and the second humidity are equal to or lower than the target humidity.

In addition, the humidity difference value determining step may be performed when the determination result indicates that both the first humidity and the second humidity exceed the target humidity.

In addition, the target humidity may be a relative humidity of 60%.

In addition, the predetermined critical value may be a relative humidity of 10%.

In addition, the flow path opening ratio adjusting step may include an outlet flow path opening ratio adjusting step of increasing the opening degree of the first outlet by a predetermined ratio and decreasing the opening degree of the second outlet by the predetermined ratio when the first humidity is higher than the second humidity, and increasing the opening degree of the second outlet by the predetermined ratio and decreasing the opening degree of the first outlet by the predetermined ratio when the second humidity is higher than the first humidity.

In addition, the flow path opening ratio adjusting step may include an inlet flow path opening ratio adjusting step of increasing the opening degree of the first inlet by the predetermined ratio and decreasing the opening degree of the second inlet by the predetermined ratio when the first humidity is higher than the second humidity, and increasing the opening degree of the second inlet by the predetermined ratio and decreasing the opening degree of the first inlet by the predetermined ratio when the second humidity is higher than the first humidity.

In addition, the method may further include after the flow path opening ratio adjusting step, a simultaneous drying process step of simultaneously supplying the hot air through the first and second outlets, in a state in which the opening degrees of the first and second inlets and the opening degrees of the first and second outlets are adjusted by the predetermined ratio, and absorbing at least a part of moisture contained in the hot air recovered through the first and second inlets.

In addition, the method may further include a simultaneous process performing time determining step of determining whether a predetermined time has elapsed after simultaneous drying processes are initiated in a state in which the opening degrees of the first and second inlets and the opening degrees of the first and second outlets are adjusted by the predetermined ratio.

In addition, when the determination result indicates that the predetermined time has elapsed after the simultaneous drying processes are initiated in the simultaneous process performing time determining step, the humidity measuring step, the target humidity reach determining step, the humidity difference value determining step, and the flow path opening ratio adjusting step may be performed again.

### [Advantageous Effect]

According to the integrated laundry treatment apparatus and the method of controlling the same according to the present disclosure, the dried state of the laundry being dried in the first laundry treatment module and the second laundry treatment module is detected in real time while the drying processes are simultaneously performed by the common drying module, and the amount of supplied dry hot air and the amount of recovered dry hot air are differently controlled for the respective treatment modules, such that the overall drying process time may be reduced and electric power consumption may be minimized, and the drying process in the washing machine and the drying process in the drying machine are simultaneously completed, such that the convenience for the user may be improved.

### [Description of Drawings]

FIG. 1 is a perspective view of an integrated laundry treatment apparatus according to an embodiment of the present disclosure.
FIG. 2 is a schematic cross-sectional view of FIG. 1.
FIGS. 3 to 6 are schematic configuration views for explaining a state in which dry hot air is supplied to a drying machine module and a washing machine module or a state in which a supply of dry hot air is cut off for respective process modes.
FIG. 7 is a functional block diagram for explaining a control unit of the integrated laundry treatment apparatus according to the embodiment of the present disclosure.
FIGS. 8 to 9 are flow charts for explaining a method of controlling the integrated laundry treatment apparatus according to the embodiment of the present disclosure.

### [Mode for Invention]

Hereinafter, exemplary embodiments of the present disclosure will be described in detail with reference to the accompanying drawings.

The present disclosure may be variously modified and may have various embodiments, and particular embodiments illustrated in the drawings will be specifically described below. The description of the embodiments is not intended to limit the present disclosure to the particular embodiments, but it should be interpreted that the present disclosure is to cover all modifications, equivalents and alternatives falling within the technical scope of the present disclosure.

In the description of the present disclosure, the terms such as "first" and "second" may be used to describe various constituent elements, but the constituent elements may not be limited by the terms. These terms are used only to distinguish one constituent element from another constituent element. For example, a first component may be named a second component, and similarly, the second component may also be named the first component, without departing from the scope of the present disclosure.

The term "and/or" may include any and all combinations of a plurality of the related and listed items.

When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element is present between the constituent elements.

The terminology used herein is used for the purpose of describing particular embodiments only and is not intended to limit the present disclosure. Singular expressions may include plural expressions unless clearly described as different meanings in the context.

The terms "comprises," "comprising," "includes," "including," "containing," "has," "having" or other variations thereof are inclusive and therefore specify the presence of stated features, integers, steps, operations, elements, and/or components, but do not preclude the presence or addition of one or more other features, integers, steps, operations, elements, components, and/or groups thereof.

Unless otherwise defined, all terms used herein, including technical or scientific terms, may have the same meaning as commonly understood by those skilled in the art to which the present disclosure pertains. The terms such as those defined in a commonly used dictionary may be interpreted as having meanings consistent with meanings in the context of related technologies and may not be interpreted as ideal or excessively formal meanings unless explicitly defined in the present application.

Further, the following embodiments are provided to more completely explain the present disclosure to those skilled in the art, and shapes and sizes of elements illustrated in the drawings may be exaggerated for a more apparent description.

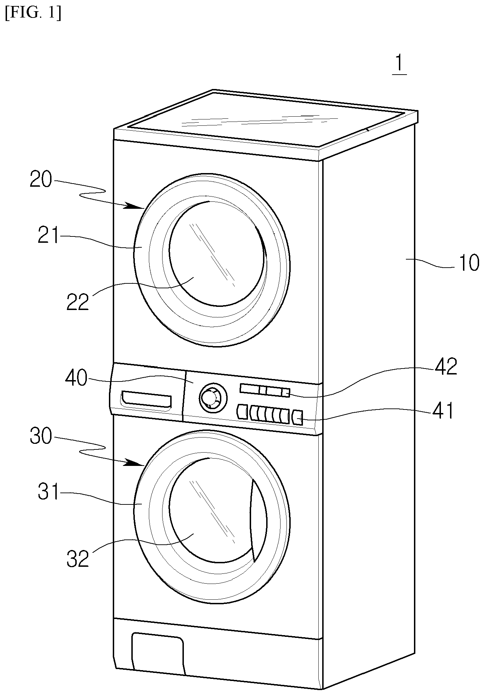

FIG. 1 is a perspective view of an integrated laundry treatment apparatus 1 according to the embodiment of the present disclosure. As illustrated in FIG. 1, the integrated laundry treatment apparatus 1 according to the embodiment of the present disclosure includes a common cabinet 10 configured to define an external appearance and having a common accommodation space therein, a first laundry treatment module 20 disposed at an upper side of the common accommodation space, a second laundry treatment module 30 disposed at a lower side of the common accommodation space, and a control panel 40 configured to define a front side of the common cabinet 10 and disposed between the first laundry treatment module 20 and the second laundry treatment module 30.

As described above, according to the present disclosure, the first and second laundry treatment modules 20 and 30, which independently perform the laundry treatment processes, are installed by being integrally stacked in an upward/downward direction in the common cabinet 10, and the first and second laundry treatment modules 20 and 30 share at least some functional components. Therefore, it is possible to remarkably reduce a size, particularly, a size in a height direction of the laundry treatment apparatus in comparison with the related art in which a washing machine and a drying machine are merely stacked.

As illustrated, since the first and second laundry treatment modules 20 and 30 are disposed in the upward/downward direction, a front-loading integrated laundry treatment apparatus is suitable instead of a top-loading integrated laundry treatment apparatus. The first and second laundry treatment modules 20 and 30 respectively include first and second doors 21 and 31 disposed at the front side of the common cabinet 10.

A first drum 22 for treating the laundry is disposed inside the first door 21, and a second drum 32 for treating the laundry is disposed inside the second door 31.

The first and second laundry treatment modules 20 and 30 may perform the same laundry treatment process or different laundry treatment processes.

More specifically, a combination of an upper washing machine module and a lower washing machine module, a combination of an upper drying machine module and a lower drying machine module, a combination of an upper washing machine module and a lower drying machine module, and a combination of an upper drying machine module and a lower washing machine module may be applied.

However, the present disclosure is not limited thereto. Hereinafter, for convenience, an embodiment will be described in which a drying machine module 20 is provided as the first laundry treatment module disposed at the upper side, and a washing machine is provided as the second laundry treatment module disposed at the lower side.

The control panel 40 is installed at the front side of the common cabinet 10 and disposed at a position between the drying machine module 20 and the washing machine module 30 in consideration of convenience and accessibility for a user's operation. As illustrated, the control panel 40 includes a manipulation unit 41 into which the user's operation command is inputted, and a display unit 42 configured to display current states of the drying machine module 20 and the washing machine module 30, a process performing situation, and the like. The control panel 40 is electrically connected to a control unit 70 to be described below, converts the user's operation command, which is inputted through the manipulation unit 41, into an electrical signal, and transmits the electrical signal to the control unit 70.

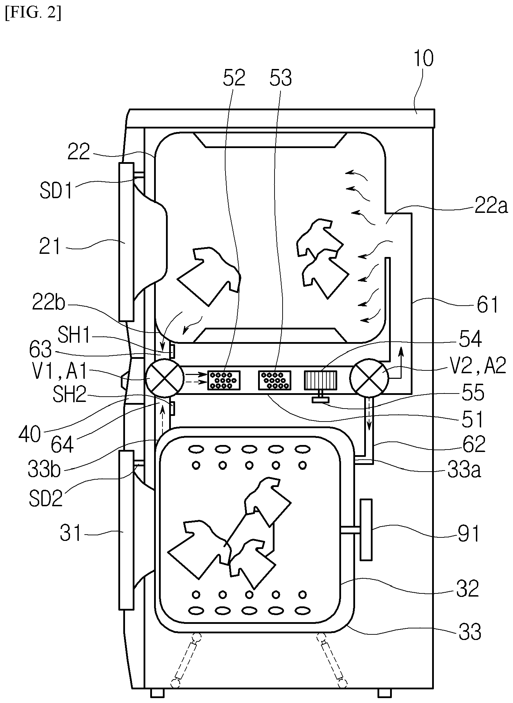

FIG. 2 is a schematic cross-sectional view of FIG. 1 and illustrates a state in which dry hot air is supplied simultaneously to the drying machine module 20 and the washing machine module 30 through a common drying module 50.

As illustrated in FIG. 2, the integrated laundry treatment apparatus 1 according to the embodiment of the present disclosure includes the common drying module 50 configured to supply the hot air simultaneously or independently to the drying machine module 20 and the washing machine module 30 and absorb and remove at least a part of moisture contained in the hot air recovered from the drying machine module 20 and the washing machine module 30.

The common drying module 50 includes a common duct 51 having a common flow path therein. The common duct 51 has a first outlet 51c and a second outlet 51d provided to supply dry hot air to the drying machine module 20 and the washing machine module 30, and a first inlet 51a and a second inlet 5 1b provided to recover hot air from the drying machine module 20 and the washing machine module 30. As illustrated, a hot air supply flow path and a hot air recovery flow path may be disposed between the drying machine module 20 and the washing machine module 30 in the upward/downward direction and optimized to prevent a thermal loss, but the present disclosure is not limited thereto.

The first outlet 51c of the common drying module 50 is connected to one end of a first supply duct 61 for guiding the hot air discharged from the common duct 51 to the drying machine module 20, and the second outlet 51d of the common drying module 50 is connected to one end of a second supply duct 62 for guiding the hot air discharged from the common duct 51 to the washing machine module 30. That is, as illustrated, the hot air passing through the common duct 51 of the common drying module 50 is divided into hot air supply ducts including the first supply duct 61 and the second supply duct 62, and the first supply duct 61 and the second supply duct 62 are respectively connected to the drying machine module 20 and the washing machine module 30.

The other end of the first supply duct 61 is connected to the drying machine module 20, more specifically, an inlet port 22a of the drying drum 22, and the other end of the second supply duct 62 is connected to the washing machine module 30, more specifically, an inlet port 33a of a washing machine tub 33.

The first inlet 51a of the common drying module 50 is connected to one end of a first recovery duct 63 for guiding the hot air discharged from the drying machine module 20 to the common duct 51, and the second inlet 51b of the common drying module 50 is connected to one end of a second recovery duct 64 for guiding the hot air discharged from the washing machine module 30 to the common duct 51. That is, as illustrated, a flow path structure is formed such that the hot air recovered through the hot air recovery ducts including the first recovery duct 63 and the second recovery duct 64 is merged into the common duct 51.

The other end of the first recovery duct 63 is connected to a discharge port 22b of the drying drum 22, and the other end of the second recovery duct 64 is connected to a discharge port 33b of the washing machine tub 33.

A heater 53 and a blower fan 54, which produce the hot air, are disposed in the common duct 51. Further, a condenser 52 is disposed at an upstream side of the heater 53 based on a flow direction of the hot air and serves to remove at least a part of moisture contained in the hot air recovered from the drying machine module 20 and the washing machine module 30.

A blower motor 55 is installed outside the common duct 51 and disposed adjacent to the blower fan 54. The blower motor 55 serves to operate the blower fan 54. As illustrated, the blower fan 54 may receive driving power from the separate blower motor 55 dedicated to operating the blower fan 54. Alternatively, the blower fan 54 may receive driving power from a drive motor for the washing drum 32 or a drive motor for the drying drum 22. Hereinafter, for convenience, as illustrated, an embodiment will be described in which the blower fan 54 is operated by the blower motor 55 dedicated to operating the blower fan 54.

Any means already publicly known in the art may be applied to the detailed configuration of the heater 53 and the condenser 52. For example, an electrothermal heater 53, a gas heater 53, a heat-pump-type condenser, or the like may be applied as the heater 53 as a heat source. A water-cooled dehumidification means, a heat-pump-type evaporator, or the like may be applied as the condenser 52.

Hereinafter, for convenience, the heater 53 and the condenser 52, which are implemented as a heat pump module 80 will be described, but the present disclosure is not limited thereto.

Meanwhile, an outlet flow path switching valve V2 is installed at an outlet side of the common duct 51 and selectively opens at least any one of the first outlet 51c and the second outlet 51d or simultaneously opens the first outlet 51c and the second outlet 51d. An inlet flow path switching valve V1 is installed at an inlet side of the common duct 51 and selectively opens at least any one of the first inlet 51a and the second inlet 51b or simultaneously opens the first inlet 51a and the second inlet 51b.

As described below, the integrated laundry treatment apparatus 1 according to the embodiment of the present disclosure has at least four process modes.

The outlet flow path switching valve V2 serves to switch an outlet flow path of the common drying module 50 so that the hot air is supplied only to at least any one of the first outlet 51c and the second outlet 51d of the common duct 51 or the hot air is supplied to both the first outlet 51c and the second outlet 5 d for the respective process modes.

Likewise, the inlet flow path switching valve V1 serves to switch an inlet flow path of the common drying module 50 so that the hot air is recovered only through at least any one of the first inlet 51a and the second inlet 51b of the common duct 51 or the hot air is recovered through both the first inlet 51a and the second inlet 51b for the respective process modes.

In addition, as described below, the outlet flow path switching valve V2 and the inlet flow path switching valve V1 may adjust opening degrees of the first and second inlets 51a and 51b and the first and second outlets 51c and 51d to control a flow rate of the hot air to be supplied to the drying machine module 20 and the washing machine module 30 in the process mode in which the hot air is supplied to both the drying machine module 20 and the washing machine module 30.

Meanwhile, the outlet flow path switching valve V2 and the inlet flow path switching valve V1 are respectively connected to valve actuators A1 and A2 for operating the outlet flow path switching valve V2 and the inlet flow path switching valve V1, and valve positions are controlled by the valve actuators A1 and A2, respectively.

For example, the outlet flow path switching valve V2 and the inlet flow path switching valve V1 are each provided in the form of a three-way valve. However, any means capable of switching a 3-way flow path and adjusting opening degrees of the inlet and the outlet of the common drying module 50 for the respective process modes may be applied, without limitation, as the outlet flow path switching valve V2, the inlet flow path switching valve V1, and the valve actuators A1 and A2. The modified example of course belongs to the scope of the present disclosure.

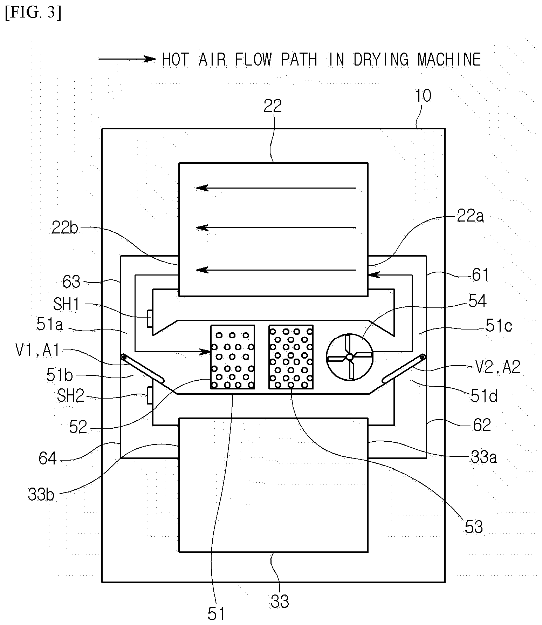

The detailed description of valve position control for the respective process modes will be made with reference to FIGS. 3 to 6.

Further, the integrated laundry treatment apparatus 1 according to the embodiment of the present disclosure includes a first humidity sensor SH1 configured to measure a first humidity of the hot air recovered through the first inlet 51a, and a second humidity sensor SH2 configured to measure a second humidity of the hot air recovered through the second inlet 51b.

The first humidity sensor SH1 serves to check a drying process state of the laundry in the drying drum 22 by measuring the humidity of the hot air discharged from the drying drum 22 of the drying machine module 20. The second humidity sensor SH1 serves to check a drying process state of the laundry in the washing drum 32 by measuring the humidity of the hot air discharged from the washing drum 32 and the tub 33 of the washing machine module 30.

The first humidity sensor SH1 and the second humidity sensor SH1 are electrically connected to the control unit 70. A signal related to the first humidity measured by the first humidity sensor SH1 and a signal related to the second humidity measured by the second humidity sensor SH1 are periodically transmitted to the control unit 70.

Therefore, the control unit 70 may check the dried state of the laundry in the drying drum 22 and the washing drum 32 on the basis of the first humidity and the second humidity while the drying machine module 20 and the washing machine module 30 simultaneously perform the drying processes. The control unit 70 creates a control signal for switching the flow path on the basis of the received first and second humidities so that a large amount of hot air may be supplied to a portion where the laundry is less dried, i.e., a portion where the hot air having a higher humidity is discharged. The control unit 70 transmits the control signal to the valve actuators A1 and A2, and the actuators A1 and A2 operate the valves on the basis of the corresponding control signal and adjust the opening degrees of the first and second inlets 51a and 51b and the opening degrees of the first and second outlets 51c and 51d.

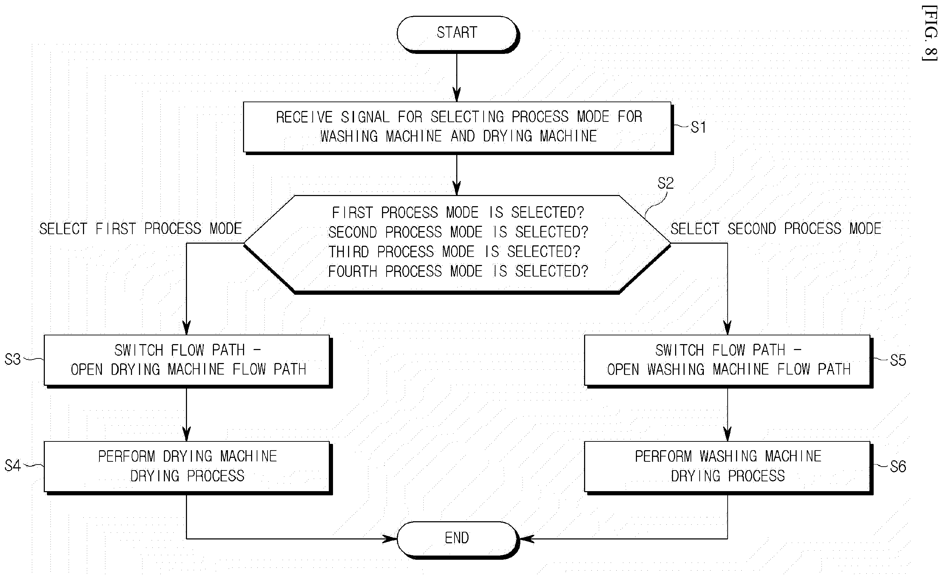

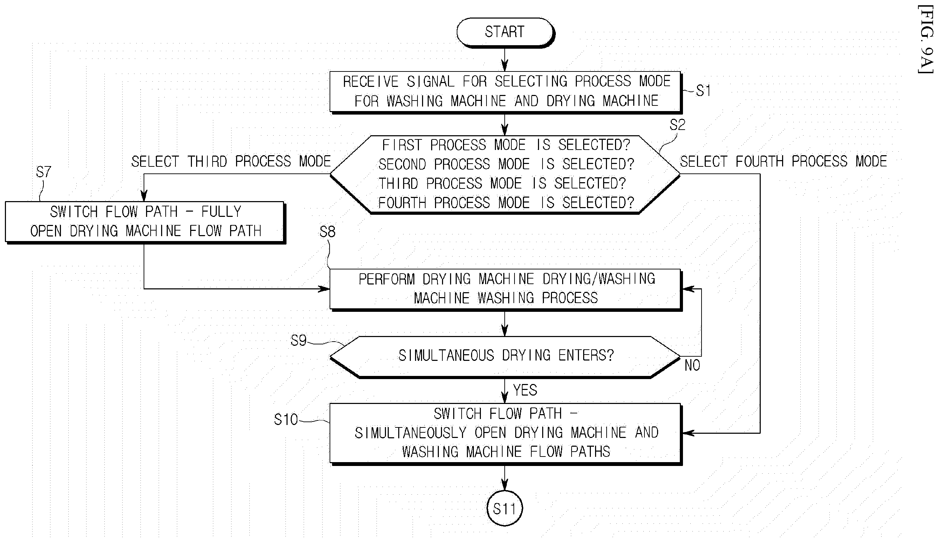

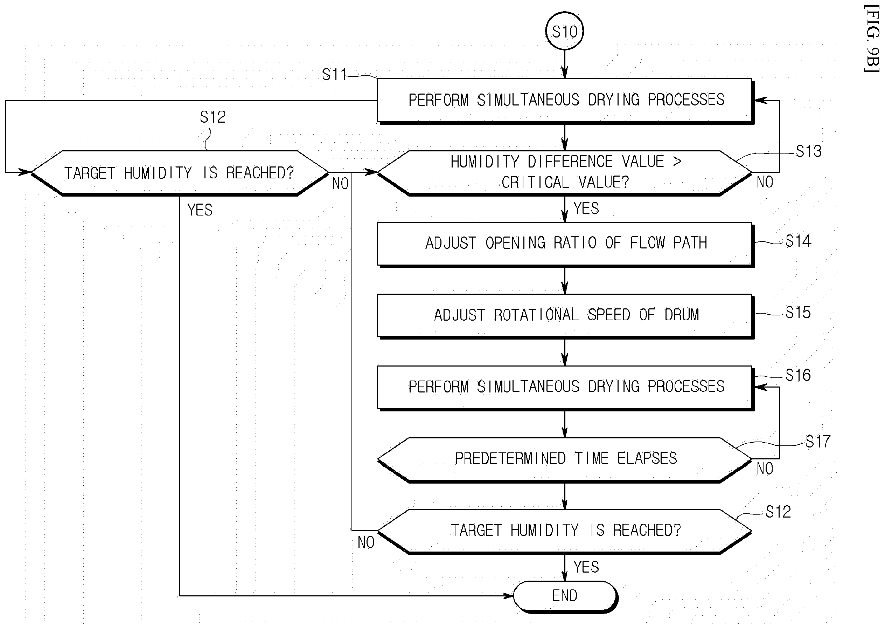

The detailed configuration related to the process of controlling the opening degrees of the first and second inlets 51a and 51b and the opening degrees of the first and second outlets 51c and 51d on the basis of the first and second humidities while the drying processes are simultaneously performed will be described below with reference to FIGS. 8 and 9.

Meanwhile, since the first humidity sensor SH1 and the second humidity sensor SH1 serve to check the dried state of the laundry in the drying drum 22 and the dried state of the laundry in the washing drum 32, the first humidity sensor SH1 and the second humidity sensor SH1 need to measure a state before a recovery flow path from the drying machine module 20 and a recovery flow path from the washing machine module 30 are merged. Therefore, the first humidity sensor SH1 and the second humidity sensor SH1 may be respectively installed in the first recovery duct 63 and the second recovery duct 64 and disposed adjacent to the first inlet 51a and the second inlet 51b at the upstream positions from the inlet flow path switching valve V1 based on the flow direction of the hot air.

Any means already publicly known in the art and capable of measuring a relative humidity in the air and converting the humidity into an electrical signal may be applied as the first humidity sensor SH1 and the second humidity sensor SH1.

FIGS. 3 to 6 are schematic configuration views for explaining a state in which the dry hot air is supplied to the drying machine module 20 and the washing machine module 30 or a state in which the supply of the dry hot air is cut off for respective process modes.

As described above, the integrated laundry treatment apparatus 1 according to the embodiment of the present disclosure may have at least four process modes including first to fourth process modes based on supplied and recovered states of the dry hot air.

The first process mode is a process mode in which the drying machine module 20 performs the drying process singly and the washing machine module 30 is in a stopped state or performs the washing process. In the first process mode, the dry hot air is supplied only to the drying machine module 20.

The second process mode is a process mode in which the washing machine module 30 performs the drying process singly and the drying machine module 20 is in a stopped state. In the second process mode, the dry hot air is supplied only to the washing machine module 30.

The third process mode is a process mode in which the drying machine module 20 performs the drying process and, at the same time, the washing machine module 30 performs the washing process and then performs the drying process. In the third process mode, the dry hot air is supplied only to the drying machine module 20 while the washing machine module 30 performs the washing process. When the washing machine module 30 completes the washing process and performs the drying process, the hot air supply and recovery flow paths are switched by the outlet flow path switching valve V2 and the inlet flow path switching valve V1 so that the hot air may be simultaneously supplied to the drying machine module 20 and the washing machine module 30.

The fourth process mode is a process mode in which the drying machine module 20 and the washing machine module 30 simultaneously perform the drying processes and the dry hot air is simultaneously supplied to the drying machine module 20 and the washing machine module 30.

First, FIG. 3 illustrates a state in which the dry hot air is supplied only to the drying machine module 20 in the first and third process modes. Referring to FIG. 3, the washing machine module 30 is in the stopped state in the first process mode, and the washing machine module 30 performs the washing process in the third process mode. Therefore, the dry hot air is not supplied to the washing machine module 30, the total amount of dry hot air is supplied only to the drying machine module 20, and the dry hot air is recovered from the drying machine module 20.

The outlet flow path switching valve V2 is operated by the valve actuator A2 to fully open the first outlet 51c of the common duct 51 and fully close the second outlet 51d of the common duct 51, and the inlet flow path valve is operated by the valve actuator A1 to fully open the first inlet 51a of the common duct 51 and fully close the second inlet 51b of the common duct 51, such that the dry hot air may be supplied only to the drying machine module 20 and the drying machine module 20 may perform the drying process singly. Therefore, as illustrated in FIG. 3, a single hot air circulation flow path is formed in respect to the drying machine module 20.

FIG. 3 illustrates an embodiment in which the outlet flow path switching valve V2 and the inlet flow path switching valve V1, which are each a three-way valve, are each provided in the form of a flap valve. Hereinafter, for convenience, the embodiment will be described in which the outlet flow path switching valve V2 and the inlet flow path switching valve V1 are each provided in the form of a flap valve, but the present disclosure is not limited thereto.

Meanwhile, the dried state of the laundry in the drying drum 22 is monitored in real time by the first humidity sensor SH1 while the dry hot air is supplied only to the drying machine module 20 by the common drying module 50 in the first and third process modes.

Therefore, as described below, when the control unit 70 determines that the first humidity measured by the first humidity sensor SH1 reaches a relative humidity of 60%, for example, the control unit 70 may perform control to complete the drying process in the drying machine module 20, thereby preventing the laundry from being excessively dried and inhibiting unnecessary electric power consumption.

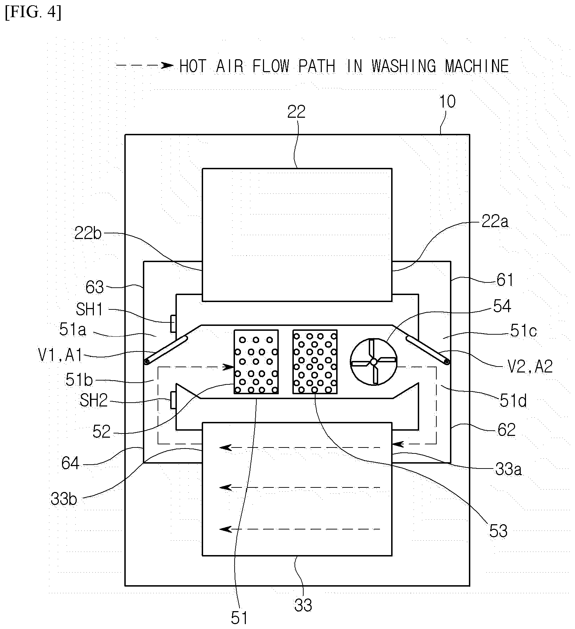

FIG. 4 illustrates a state in which the dry hot air is supplied only to the washing machine module 30 in the second process mode. Referring to FIG. 4, since the drying machine module 20 is in the stopped state in the second process mode, the dry hot air is not supplied to the drying machine module 20, and the total amount of dry hot air is supplied only to the washing machine module 30.

The outlet flow path switching valve V2 is operated by the valve actuator A2 to fully close the first outlet 51c of the common duct 51 and fully open the second outlet 51d of the common duct 51, and the inlet flow path valve is operated by the valve actuator A1 to fully close the first inlet 51a of the common duct 51 and fully open the second inlet 51b of the common duct 51, such that the dry hot air may be supplied only to the washing machine module 30 and the washing machine module 30 may perform the drying process singly. Therefore, as illustrated in FIG. 4, a single hot air circulation flow path is formed in respect to the washing machine module 30.

The dried state of the laundry in the washing drum 32 is monitored in real time by the second humidity sensor SH1 in the same way as the first and third process modes while the dry hot air is supplied only to the washing machine module 30 by the common drying module 50 in the second process mode.

Therefore, as described below, when the control unit 70 determines that the second humidity measured by the second humidity sensor SH1 reaches a relative humidity of 60%, for example, the control unit 70 performs control to complete the drying process in the washing machine module 30, thereby preventing the laundry from being excessively dried and inhibiting unnecessary electric power consumption.

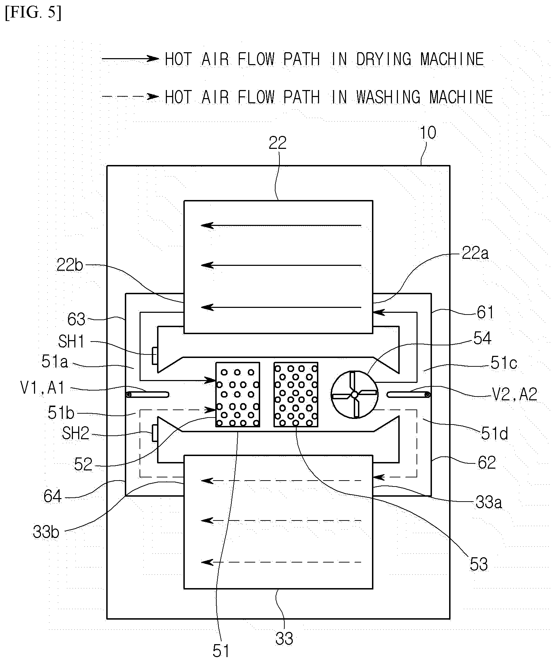

FIG. 5 illustrates a state in which the dry hot air is simultaneously supplied to the drying machine module 20 and the washing machine module 30 in the third and fourth process modes.

Referring to FIG. 5, the dry hot air is simultaneously supplied to the drying machine module 20 and the washing machine module 30 and simultaneously recovered from the drying machine module 20 and the washing machine module 30 so that the washing process of the washing machine module 30 is completed and the drying process is performed while the drying machine module 20 performs the drying process in the third process mode or so that both the drying machine module 20 and the washing machine module 30 perform the drying processes in the fourth process mode.

The outlet flow path switching valve V2 is operated by the valve actuator A2 to at least partially open the first outlet 51c and the second outlet 51d of the common duct 51, and the inlet flow path valve is operated by the valve actuator A1 to at least partially open the first inlet 51a and the second inlet 51b of the common duct 51, such that the dry hot air may be simultaneously supplied to the drying machine module 20 and the washing machine module 30, and the drying machine module 20 and the washing machine module 30 may simultaneously perform the drying processes. Therefore, as illustrated in FIG. 4, hot air circulation flow paths are formed in respect to the drying machine module 20 and the washing machine module 30.

As illustrated in FIG. 5, the outlet flow path switching valve V2 is controlled so that the first outlet 51c and the second outlet 51d of the common duct 51 have the same opening degree, and the inlet flow path switching valve V1 is controlled so that the first inlet 51a and the second inlet 5 1b of the common duct 51 have the same opening degree, such that the dry hot air is supplied basically at the same flow rate to the drying drum 22 and the washing drum 32 while the drying drum 22 and the washing drum 32 simultaneously perform the drying process.

However, in a situation in which a large amount of dry hot air needs to be supplied to the drying machine module 20 such as a case in which the amount of laundry in the drying drum 22 is larger than the amount of laundry in the washing drum 32 and a case in which the washing drum 32 is sterilized and disinfected, the outlet flow path switching valve V2 and the inlet flow path switching valve V1 may be controlled so that the opening degree of the first inlet 51a is larger than the opening degree of the second inlet 51b and the opening degree of the first outlet 51c is larger than the opening degree of the second outlet 5 1d, such that a larger amount of dry hot air may be supplied to the drying drum 22 and recovered from the drying drum 22.

Meanwhile, the dried state of the laundry in the drying drum 22 and the dried state of the laundry in the washing drum 32 are respectively monitored in real time by the first humidity sensor SH1 and the second humidity sensor SH1 while the dry hot air is simultaneously supplied to the drying machine module 20 and the washing machine module 30 by the common drying module 50 while the drying machine module 20 and the washing machine module 30 simultaneously perform the drying processes.

As described below, when the control unit 70 determines that at least any one of the first humidity and the second humidity measured by the first humidity sensor SH1 and the second humidity sensor SH1 reaches a predetermined relative humidity, for example, when the control unit 70 determines that the first humidity reaches a relative humidity of 60% and the second humidity is lower than a relative humidity of 60%, the control unit 70 may switch the outlet flow path switching valve V2 and the inlet flow path switching valve V1 to the states illustrated in FIG. 4 so that the drying process in the drying machine module 20 is stopped and the total amount of dry hot air is transmitted to the washing machine module 30, thereby preventing the laundry in the drying drum 22 from being excessively dried and inhibiting unnecessary electric power consumption.

In contrast, when the control unit 70 determines that the second humidity reaches a relative humidity of 60% and the first humidity is lower than a relative humidity of 60%, the control unit 70 switches the outlet flow path switching valve V2 and the inlet flow path switching valve V1 to the states illustrated in FIG. 3 so that the drying process in the washing machine module 30 is stopped and the total amount of dry hot air is transmitted to the drying machine module 20.

Meanwhile, there may occur a case in which the simultaneous drying processes are entirely further delayed than expected when a deviation between the first humidity and the second humidity is severe during the simultaneous drying processes even though both the first humidity and the second humidity are lower than the relative humidity of 60%.

To prevent the delay, the control unit 70 calculates a difference value between the first humidity and the second humidity. When the control unit 70 determines that the corresponding difference value exceeds a predetermined critical value, particularly, a relative humidity of 10%, the control unit 70 performs control to switch the state of the outlet flow path switching valve V2 and the state of the inlet flow path switching valve V1 so that a larger amount of hot air may be supplied to one of the drying machine module 20 and the washing machine module 30 from which the hot air having a higher humidity is discharged.

For example, when the control unit 70 determines that the first humidity is higher than the second humidity by a relative humidity of 10%, the control unit 70 controls the outlet flow path switching valve V2 to increase the opening degree of the first outlet 51c of the common duct 51 by a predetermined ratio and decrease the opening degree of the second outlet 51d by the predetermined ratio, and the control unit 70 controls the inlet flow path switching valve V1 to adjust the opening degrees of the first inlet 51a and the second inlet 51b of the common duct 51 by the same predetermined ratio.

In this case, the predetermined ratio by which the opening degrees of the first and second inlets 51a and 51b and the first and second outlets 51c and 51d of the common duct 51 are adjusted may be about 5%.

As described above, the opening degrees of the first and second inlets 51a and 51b and the first and second outlets 51c and 51d of common duct 51 may be adjusted and the amount of dry hot air may be differently controlled on the basis of the deviation between the first humidity and the second humidity, thereby minimizing electric power consumption caused when the simultaneous drying processes are entirely delayed.

The detailed contents related to the measurement of the first humidity and the second humidity during the simultaneous drying processes and the detailed contents related to control of the outlet flow path switching valve V2 and the inlet flow path switching valve V1 will be described below with reference to FIG. 9A and FIG. 9B.

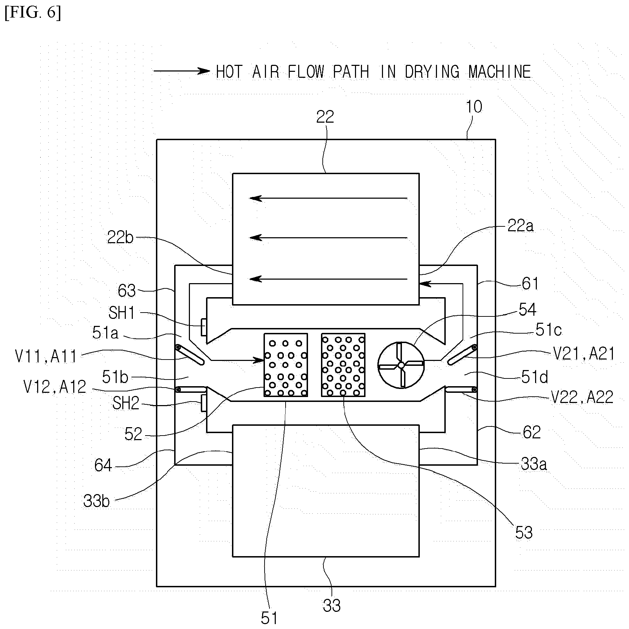

FIG. 6 illustrates another embodiment of the integrated laundry treatment apparatus 1 according to the present disclosure, in which the inlet flow path switching valve V1 and the outlet flow path switching valve V2 each include two valves.

As illustrated in FIG. 6, the inlet flow path switching valve V1 includes a first inlet flow path switching valve V11 dedicated to opening or closing the first inlet 51a, and a second inlet flow path switching valve V12 dedicated to opening or closing the second inlet 51b.

Further, the outlet flow path switching valve V2 includes a first outlet flow path switching valve V21 dedicated to opening or closing the first outlet 51c, and a second outlet flow path switching valve V22 dedicated to opening or closing the second outlet 51d.

Unlike the embodiment illustrated in FIGS. 3 to 5 in which the first and second inlets 51a and 51b cannot be simultaneously closed and the first and second outlets 51c and 51d cannot be simultaneously closed, the embodiment illustrated in FIG. 6 may be configured such that the drying machine hot air flow paths and the washing machine hot air flow paths may be simultaneously closed.

Since the hot air flow paths are simultaneously closed as described above, it is possible to remove lint and dust produced during the drying processes in the drying machine module 20 and the washing machine module 30 and accumulated on the condenser 52. Further, it is possible to prevent lint and dust, which remain while the condenser 52 is cleaned, from entering the washing drum 32 or the drying drum 22 again and contaminating the washing drum 32 or the drying drum 22.

The first outlet flow path switching valve V21 and the second outlet flow path switching valve V22 are respectively operated by dedicated valve actuators V21 and V22, and the first inlet flow path switching valve V11 and the second inlet flow path switching valve V12 are respectively operated by dedicated valve actuators V11 and V12.

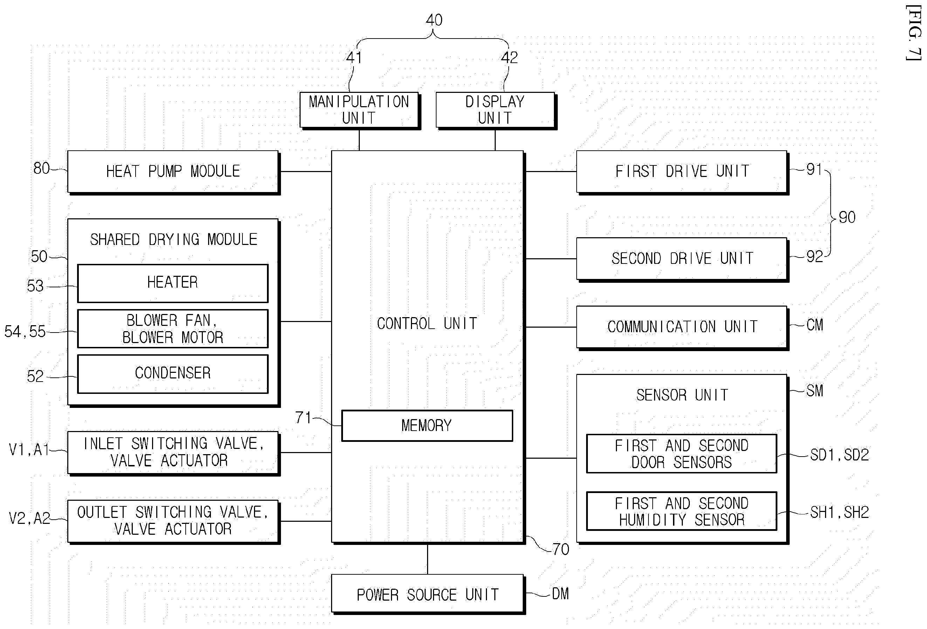

FIG. 7 is a functional block diagram for explaining the control unit 70 of the integrated laundry treatment apparatus 1 according to the embodiment of the present disclosure, and FIGS. 8 to 9 are flow charts related to a method of controlling the integrated laundry treatment apparatus 1 according to the embodiment of the present disclosure.

Hereinafter, the method of controlling the integrated laundry treatment apparatus 1 according to the embodiment of the present disclosure will be described focusing on the control unit 70 illustrated in FIG. 7.

First, as illustrated in FIG. 8, the control unit performs a process mode selection signal receiving step S 1 of receiving a signal for selecting at least any one of the process modes at least including the first to fourth process modes.

In the process mode selection signal receiving step S1, the control unit 70 receives the signal for selecting the first to fourth process modes on the basis of a selection command physically inputted from the manipulation unit 41 of the control panel 40 illustrated in FIG. 7. Alternatively, the control unit 70 may receive the signal for selecting any one of the first to fourth process modes on the basis of a selection command inputted in a wireless manner through a communication unit CM instead of the control panel 40. The communication unit CM is connected to a user mobile device (not illustrated) through any wireless communication means publicly known in the art.

Then, the control unit 70 performs a process mode determining step S2 of determining which process mode is selected among the first to fourth process modes on the basis of the received selection signal.

In this case, the control unit 70 may provide the user with information indicating that a particular process mode is selected through the user mobile device or the display unit 42 illustrated in FIG. 7.

When the determination result indicates that the first process mode is selected in the process mode determining step S2, the control unit 70 performs a drying machine hot air flow path opening step S3 of opening the drying machine hot air flow path as a preparation step for allowing the drying machine module 20 to perform the drying process singly.

In the drying machine hot air flow path opening step S3, the control unit 70 produces the control signal for fully opening the first inlet 51a and the first outlet 51c of the common duct 51 and fully closing the second inlet 51b and the second outlet 51d of the common duct 51, like the state illustrated in FIG. 3, and transmits the control signal to the valve actuators A1 and A2 illustrated in FIG. 7.

When the drying machine hot air flow path opening step S3 is completed, the control unit 70 performs a drying machine drying process performing step S4 of performing the drying process in the drying machine module 20.

In the drying machine drying process performing step S4, the control unit 70 may check whether the first door 21 of the drying machine module 20 is closed from a sensor for the first door 21 of a sensor unit SM illustrated in FIG. 7 before supplying electric power to a first drive unit 91 of a drive unit 90 for operating the drying drum 22.

When the checking result indicates that the first door 21 is closed, the control unit 70 may detect the amount of laundry by initially operating the drying drum 22 by supplying electric power from a power source unit PM to the first drive unit 91.

The control unit 70 may compare the detected amount of laundry with necessary drying time data for the respective amounts of laundry stored in advance in a memory 71 and transmit information on expected drying process time to the display unit 42 or the user mobile device.

In this case, when the expected drying process time is determined by initially operating the first drive unit 91, the control unit 70 performs control to produce the dry hot air by supplying the electric power to the heat pump module 80 and the blower motor 55 of the common drying module 50.

Meanwhile, since the washing machine module 30 is in a stopped state in the first process mode, the control unit 70 performs control not to supply electric power from the power source unit PM to a second drive unit 92 of the drive unit 90 for operating the washing drum 32.

Meanwhile, when the determination result indicates that the second process mode is selected in the process mode determining step S2, the control unit 70 performs a washing machine hot air flow path opening step S5 of opening the washing machine hot air flow path as a preparation step of allowing the washing machine module 30 to perform the drying process singly, as illustrated in FIG. 8.

In the washing machine hot air flow path opening step S5, the control unit 70 produces the control signal for fully opening the second inlet 51b and the second outlet 51d of the common duct 51 and fully closing the first inlet 51a and the first outlet 51c of the common duct 51, like the state illustrated in FIG. 4, and transmits the control signal to the valve actuators A1 and A2 illustrated in FIG. 7.

When the washing machine hot air flow path opening step S5 is completed, the control unit 70 performs a washing machine drying process performing step S6 of performing the drying process in the washing machine module 30.

In the washing machine drying process performing step S6, the control unit 70 may check whether the second door 31 of the washing machine module 30 is closed from a sensor for the second door 31 illustrated in FIG. 7 before supplying electric power to the second drive unit 92 for operating the washing drum 32.

When the checking result indicates that the second door 31 is closed, the control unit 70 may detect the amount of laundry by initially operating the washing drum 32 by supplying electric power from the power source unit PM to the second drive unit 92.

The control unit 70 may compare the detected amount of laundry with necessary drying time data for the respective amounts of laundry stored in advance in a memory 71 and transmit information on expected drying process time to the display unit 42 or the user mobile device. The expected drying process time of the washing machine module 30 may be different from the drying process time of the drying machine module 20.

In this case, when the expected drying process time is determined by initially operating the second drive unit 92, the control unit 70 performs control to produce the dry hot air by supplying the electric power to the heat pump module 80 and the blower motor 55 of the common drying module 50.

Meanwhile, since the drying machine module 20 is in a stopped state in the second process mode, the control unit 70 performs control not to supply electric power from the power source unit PM to the first drive unit 91 for operating the drying drum 22.

FIG. 9A and FIG. 9B illustrate steps to be performed by performing the third or fourth process mode among the first to fourth process modes.

As illustrated in FIG. 9A and FIG. 9B, when the determination result indicates that the third process mode is selected in the process mode determining step S2, the control unit 70 performs a drying machine hot air flow path opening step S7 of opening the drying machine hot air flow path as a preparation step for allowing the drying machine module 20 to perform the drying process singly.

The drying machine hot air flow path opening step S7 is performed basically in the same way as the drying machine hot air flow path opening step S3 performed when the first process mode is selected. The control unit 70 produces the control signal for fully opening the first inlet 51a and the first outlet 51c of the common duct 51 and fully closing the second inlet 51b and the second outlet 5 1d of the common duct 51 so that the hot air flow path is created only for the drying machine module 20, and the control unit 70 may transmit the control signal to the valve actuators A1 and A2 illustrated in FIG. 7.

When the drying machine hot air flow path opening step S7 is completed, the control unit 70 may perform a drying machine drying/washing machine washing process performing step S8 of performing the drying process in the drying machine module 20 and the washing process in the washing machine module 30.

In the drying machine drying/washing machine washing process performing step S8, the control unit 70 may check whether the first door 21 and the second door 31 are closed from the sensor for the first door 21 and the sensor for the second door 31 illustrated in FIG. 7 before supplying electric power to the first drive unit 91 and the second drive unit 92.

When the checking result indicates that the first door 21 and the second door 31 are closed, the control unit 70 may detect the amount of laundry in the drying drum 22 and the amount of laundry in the washing drum 32 by initially operating the drying drum 22 and the washing drum 32 by supplying electric power from the power source unit PM to the first drive unit 91 and the second drive unit 92.

The control unit 70 may compare the detected amount of dried laundry with necessary drying time data for the respective amounts of dried laundry stored in advance in the memory 71 and transmits information on expected drying process time of the drying machine module 20 to the display unit 42 or the user mobile device. Further, the control unit 70 may compare the detected amount of washed laundry with necessary drying time data for the respective amounts of washed laundry stored in advance in the memory 71 and transmit information on expected washing process time of the washing machine module 30 to the display unit 42 or the user mobile device.

Thereafter, when the expected drying process time of the drying machine module 20 is determined by initially operating the first drive unit 91, the control unit 70 performs control to produce the dry hot air by supplying the electric power to the heat pump module 80 and the blower motor 55 of the common drying module 50.

Next, the control unit 70 performs a simultaneous drying processes entering determining step S9 of determining whether the washing process in the washing machine module 30 is completed, whether to supply the dry hot air to the washing machine module 30, and whether the simultaneous drying processes enter.

More specifically, whether the washing process in the washing machine module 30 is completed is determined during the drying process in the drying machine module 20.

If the control unit 70 determines that the drying process in the drying machine module 20 is completed in a state in which the washing process in the washing machine module 30 is not completed, the control unit 70 stops the drying process in the drying machine module 20 and continuously performs the washing process in the washing machine module 30.

In addition, when the washing process in the washing machine module 30 is completed and the drying process in the washing machine module 30 is intended to be performed after the drying process in the drying machine module 20 is completed, the control unit 70 performs control to perform the washing machine hot air flow path opening step S5 of opening the washing machine hot air flow path illustrated in FIG. 8 and perform the washing machine drying process performing step S6.

Meanwhile, when the washing process in the washing machine module 30 is completed and the drying process in the washing machine module 30 is intended to be performed in a state in which the drying process in the drying machine module 20 is being performed, the control unit 70 performs a drying machine/washing machine hot air flow path simultaneous opening step S10 of simultaneously opening the drying machine hot air flow path and the washing machine hot air flow path as a preparation step for simultaneously performing the drying processes in the drying machine module 20 and the washing machine module 30.

In the drying machine/washing machine hot air flow path simultaneous opening step S10, the control unit 70 may produce the control signal for fully opening the first and second inlets 51a and 51b and the first and second outlets 51c and 51d of the common duct 51 so that the hot air flow paths may be simultaneously created for the drying machine module 20 and the washing machine module 30, and the control unit 70 may transmit the control signal to the valve actuators A1 and A2 illustrated in FIG. 7.

As illustrated in FIG. 5, the outlet flow path switching valve V2 is operated by the valve actuator A2 to at least partially open the first outlet 51c and the second outlet 51d of the common duct 51, and the inlet flow path valve is operated by the valve actuator A1 to at least partially open the first inlet 51a and the second inlet 51b of the common duct 51, such that the dry hot air may be simultaneously supplied to the drying machine module 20 and the washing machine module 30, and the drying machine module 20 and the washing machine module 30 may simultaneously perform the drying processes.

As described above, the outlet flow path switching valve V2 is controlled so that the first outlet 51c and the second outlet 51d of the common duct 51 have the same opening degree, and the inlet flow path switching valve V1 is controlled so that the first inlet 51a and the second inlet 51b of the common duct 51 have the same opening degree, such that the dry hot air is supplied basically at the same flow rate to the drying drum 22 and the washing drum 32 while the drying drum 22 and the washing drum 32 simultaneously perform the drying process.

Meanwhile, when the drying machine/washing machine hot air flow path simultaneous opening step S10 is completed as described above, the control unit 70 performs a drying machine/washing machine simultaneous drying processes step S11 of performing the drying processes simultaneously in the drying machine module 20 and the washing machine module 30.

During the simultaneous drying processes step S11, the control unit 70 performs a humidity measuring step S12 of measuring, in real time, a relative humidity of the hot air recovered through the first inlet 51a and the second inlet 51b of the common drying module 50.

More specifically, in the humidity measuring step S12, the control unit 70 performs a first humidity measuring step of measuring, in real time, the first humidity by using the first humidity sensor SH1 to check the dried state of the laundry in the drying drum 22, and a first humidity measuring step of measuring, in real time, the second humidity by using the second humidity sensor SH1 to check the dried state of the laundry in the washing drum 32.

In this case, when the control unit 70 determines that at least any one of the first humidity and the second humidity measured by the first humidity sensor SH1 and the second humidity sensor SH1 reaches a predetermined target humidity, for example, when the control unit 70 determines that the first humidity reaches a relative humidity of 60% and the second humidity is lower than a relative humidity of 60%, the control unit 70 may switch the outlet flow path switching valve V2 and the inlet flow path switching valve V1 to the states illustrated in FIG. 4 so that the drying process in the drying machine module 20 is stopped and the total amount of dry hot air is transmitted to the washing machine module 30, thereby preventing the laundry in the drying drum 22 from being excessively dried and inhibiting unnecessary electric power consumption.

In contrast, when the control unit 70 determines that the second humidity reaches a relative humidity of 60% and the first humidity is lower than a relative humidity of 60%, the control unit 70 performs control to switch the outlet flow path switching valve V2 and the inlet flow path switching valve V1 to the states illustrated in FIG. 3 so that the drying process in the washing machine module 30 is stopped and the total amount of dry hot air is transmitted to the drying machine module 20.

Meanwhile, there may occur a case in which the simultaneous drying processes are entirely further delayed than expected when a deviation between the first humidity and the second humidity is severe during the simultaneous drying processes even though both the first humidity and the second humidity are lower than the relative humidity of 60%.

To this end, the control unit 70 performs a humidity difference value determining step S13 of calculating a difference value between the first humidity and the second humidity and determining whether the corresponding difference value exceeds a predetermined critical value, particularly, a relative humidity of 10%.

In the humidity difference value determining step S13, when the determination result indicates that the difference value between the first humidity and the second humidity does not exceed the predetermined critical value, the control unit 70 perform control to continuously perform the drying time drying machine/washing machine simultaneous drying processes step S11 until the first humidity and the second humidity reach a target humidity.

However, in the humidity difference value determining step S13, when the determination result indicates that the difference value between the first humidity and the second humidity exceeds the predetermined critical value, the control unit 70 performs a flow path opening ratio adjusting step S14 of adjusting a ratio of the hot air supplied to the drying machine module 20 and the washing machine module 30 by changing the opening degrees of the first outlet 51c and the second outlet 51d of the common duct 51.

In the flow path opening ratio adjusting step S14, the control unit 70 performs control to switch the state of the outlet flow path switching valve V2 and the state of the inlet flow path switching valve V1 so that a larger amount of hot air may be supplied to one of the drying machine module 20 and the washing machine module 30 from which the hot air having a higher humidity is discharged.

For example, when the control unit 70 determines that the first humidity is higher than the second humidity by a relative humidity of 10%, the control unit 70 controls the outlet flow path switching valve V2 to increase the opening degree of the first outlet 51c of the common duct 51 by a predetermined ratio and decrease the opening degree of the second outlet 51d by the predetermined ratio, and the control unit 70 controls the inlet flow path switching valve V1 to adjust the opening degrees of the first inlet 51a and the second inlet 51b of the common duct 51 by the same predetermined ratio.

In this case, the predetermined ratio by which the opening degrees of the first and second inlets 51a and 51b and the first and second outlets 51c and 51d of the common duct 51 are adjusted may be about 5%.

Meanwhile, in a case in which the difference value between the first humidity and the second humidity is a difference value larger than the predetermined critical value, i.e., a relative humidity of 10%, for example, a difference value equal to or larger than a relative humidity of 15%, a drum rotational speed adjusting step S15 of increasing a rotational speed of the drum of one of the drying machine module 20 and the washing machine module 30 from which the hot air having a higher humidity is discharged may be performed in addition to the flow path opening ratio adjusting step S14.

The control unit 70 continuously performs the drying machine/washing machine simultaneous drying processes performing step S16 in the state in which the opening ratio of the flow path and the rotational speed of the drum are adjusted as described above, and the control unit 70 performs a time elapse determining step 17 of determining whether a predetermined time elapses after the adjustment of the opening ratio of the flow path and the rotational speed of the drum is completed. The predetermined time may be set as 5 minutes to 10 minutes in consideration of the amount of laundry existing in the drying drum 22 and the washing drum 32 and the current remaining drying process time.

When the determination result indicates that the predetermined time has elapsed in the time elapse determining step S17, the control unit 70 performs control to perform the humidity measuring step S12 again and end the drying process or perform the humidity difference value determining step S13, the flow path opening ratio adjusting step S14, the drum rotational speed adjusting step S15, and the drying machine/washing machine simultaneous drying processes performing step S16 again depending on the humidity measurement result.

Meanwhile, as illustrated in FIG. 9A and FIG. 9B, when the determination result indicates that the fourth process mode is selected in the process mode determining step S2, the remaining steps, except for the drying machine hot air flow path opening step S7, the drying machine drying/washing machine washing process performing step S8, the simultaneous drying processes entering determining step S9 performed in the third process mode, are performed. Therefore, the control unit 70 performs control to immediately perform the drying machine/washing machine hot air flow path simultaneous opening step S10 simultaneously on the drying machine module 20 and the washing machine module 30 and then perform the above-mentioned subsequent steps.

It can be understood that the above-mentioned technical features of the present disclosure may be carried out in any other specific form by those skilled in the art without changing the technical scope or the essential features of the present disclosure.

Accordingly, it should be understood that the aforementioned embodiments are described for illustration in all aspects and are not limited, and the scope of the present disclosure shall be represented by the claims to be described below, and it should be construed that all of the changes or modified forms derived from the meaning and the scope of the claims, and an equivalent concept thereto are included in the scope of the present disclosure.

## Claims

1. An integrated laundry treatment apparatus comprising:
a cabinet (10) having a common accommodation space therein;
a first laundry treatment module (20) disposed at an upper side in the common accommodation space;
a second laundry treatment module (30) disposed at a lower side in the common accommodation space;
a common drying module (50) configured to produce hot air and supply the hot air to the first laundry treatment module (20) and the second laundry treatment module (30) through a first outlet (5 1c) and a second outlet (51d), the common drying module (50) being configured to absorb at least a part of moisture contained in hot air recovered from the first laundry treatment module (20) and the second laundry treatment module (30) through a first inlet (51a) and a second inlet (51b);
an outlet flow path switching valve (V2) configured to selectively open at least any one of the first outlet (51c) and the second outlet (51d) or simultaneously open the first outlet (51c) and the second outlet (5 1d);
an inlet flow path switching valve (V1) configured to selectively open at least any one of the first inlet (51a) and the second inlet (51b) or simultaneously open the first inlet (51a) and the second inlet (51b);
a first humidity sensor (SH1) configured to measure a first humidity of the hot air recovered through the first inlet (5 1a);
a second humidity sensor (SH2) configured to measure a second humidity of the hot air recovered through the second inlet (51b); and
a control unit (70) electrically connected to the first humidity sensor (SH1) and the second humidity sensor (SH2) and configured to produce a control signal for operating the outlet flow path switching valve (V2) and the inlet flow path switching valve (V1),
wherein the control unit (70) is configured to receive a signal related to the first humidity measured by the first humidity sensor (SH1) and a signal related to the second humidity measured by the second humidity sensor (SH2) while the hot air is simultaneously supplied to the first laundry treatment module (20) and the second laundry treatment module (30), and
wherein the control unit (70) is configured to calculate a difference value between the first humidity and the second humidity when the control unit (70) determines that both the first humidity and the second humidity exceed a predetermined target humidity, and when the difference value exceeds a predetermined critical value, the control unit (70) is configured to operate the outlet flow path switching valve (V2) to change opening degrees of the first and second outlets (51c, 51d).

2. The integrated laundry treatment apparatus of claim 1, further comprising:
a hot air supply duct comprising a first supply duct (61) configured to fluid-connect the first outlet (51c) and the first laundry treatment module (20), and a second supply duct (62) configured to fluid-connect the second outlet (51d) and the second laundry treatment module (30); and
a hot air recovery duct comprising a first recovery duct (63) configured to fluid-connect the first inlet (51a) and the first laundry treatment module (20), a second recovery duct (64) configured to fluid-connect the second inlet (51b) and the second laundry treatment module (30).

3. The integrated laundry treatment apparatus of claim 2, wherein the first humidity sensor (SH1) is disposed adjacent to the first inlet (51a) and installed in the first recovery duct (63), and the second humidity sensor (SH2) is disposed adjacent to the second inlet (51b) and installed in the second recovery duct (64).

4. The integrated laundry treatment apparatus of claim 1, wherein the common drying module (50) comprises:
a common duct (51) having a hot air flow path therein and having the first and second inlets (51a, 51b) and the first and second outlets (51c, 51d);
a heater (53) and a blower fan (54) disposed in the common duct (51) and configured to produce hot air to be discharged to the first outlet (5 1c) and the second outlet (51d); and
a condenser (52) configured to absorb at least a part of moisture contained in the hot air recovered through the first inlet (5 1a) and the second inlet (51b).

5. The integrated laundry treatment apparatus of claim 1, wherein the control unit (70) is configured to compare the first humidity and the second humidity with a predetermined target humidity before calculating the difference value between the first humidity and the second humidity, and configured to calculate the difference value between the humidities when the control unit (70) determines that both the first humidity and the second humidity exceed the target humidity.

6. The integrated laundry treatment apparatus of claim 5, wherein the target humidity is a relative humidity of 60%;
or
wherein the predetermined critical value is a relative humidity of 10%.

7. The integrated laundry treatment apparatus of claim 5, further comprising:
a first actuator electrically connected to the control unit (70) and configured to operate the outlet flow path switching valve (V2) on the basis of the control signal of the control unit (70); and
a second actuator electrically connected to the control unit (70) and configured to operate the inlet flow path switching valve (V1) on the basis of the control signal of the control unit (70).

8. The integrated laundry treatment apparatus of claim 7, wherein the control unit (70) is configured to produce a control signal for increasing the opening degree of the first outlet (51c) by a predetermined ratio and decreasing the opening degree of the second outlet (51d) by the predetermined ratio when the first humidity is higher than the second humidity, and the control unit (70) is configured to transmit the control signal to the first actuator and the second actuator, and
wherein the control unit (70) is configured to produce a control signal for increasing the opening degree of the second outlet (51d) by the predetermined ratio and decreasing the opening degree of the first outlet (51c) by the predetermined ratio when the second humidity is higher than the first humidity, and the control unit (70) is configured to transmit the control signal to the first actuator and the second actuator;
and preferably wherein the control unit (70) is configured to produce a control signal for increasing the opening degree of the first inlet (51a) by the predetermined ratio and decreasing the opening degree of the second inlet (51b) by the predetermined ratio when the first humidity is higher than the second humidity, and the control unit (70) is configured to transmit the control signal to the first actuator and the second actuator, and
wherein the control unit (70) is configured to produce a control signal for increasing the opening degree of the second inlet (51b) by the predetermined ratio and decreasing the opening degree of the first inlet (51a) by the predetermined ratio when the second humidity is higher than the first humidity, and the control unit (70) is configured to transmit the control signal to the first actuator and the second actuator.

9. A method of controlling an integrated laundry treatment apparatus, the method comprising:
a simultaneous drying processes step (S11) of simultaneously supplying hot air through first and second outlets (51c, 51d) of a common drying module (50) to first and second laundry treatment modules (20, 30) respectively disposed upper and lower sides in a common accommodation space in a cabinet (10) and absorbing at least a part of moisture contained in hot air recovered through first and second inlets (51a, 51b) of the common drying module (50) from the first and second laundry treatment modules (20, 30);
a humidity measuring step (S12) of measuring a relative humidity of the hot air recovered through the first and second inlets (51a, 51b);
a humidity difference value determining step (S13) of calculating a difference value between the measured humidities and determining whether the calculated difference value exceeds a predetermined critical value; and
a flow path opening ratio adjusting step (S14) of adjusting a ratio of the hot air to be supplied to the first laundry treatment module (20) and the second laundry treatment module (30) by changing opening degrees of the first and second outlets (51c, 51d) when the difference value exceeds the predetermined critical value, and
wherein the humidity measuring step (S12) is configured to compare a first humidity of hot air discharged from the first laundry treatment module (20) and a second humidity of hot air discharged from the second laundry treatment module (30) with a predetermined target humidity.

10. The method of claim 9, wherein the humidity measuring step (S12) comprises:
a first humidity measuring step of measuring a first humidity of hot air discharged from the first laundry treatment module (20) by using a first humidity sensor (SH1) disposed adjacent to the first inlet (5 1a); and
a second humidity measuring step of measuring a second humidity of hot air discharged from the second laundry treatment module (30) by using a second humidity sensor (SH2) disposed adjacent to the second inlet (51b).

11. The method of claim 10, wherein the humidity measuring step (S12) further comprises a target humidity reach determining step of comparing the first humidity and the second humidity with a predetermined target humidity and determining whether the first humidity and the second humidity are equal to or lower than the target humidity;
and preferably wherein the humidity difference value determining step (S13) is performed when the determination result indicates that both the first humidity and the second humidity exceed the target humidity.

12. The method of claim 10, wherein the target humidity is a relative humidity of 60%;
or
wherein the predetermined critical value is a relative humidity of 10%.

13. The method of claim 11, wherein the flow path opening ratio adjusting step (S14) comprises an outlet flow path opening ratio adjusting step of increasing the opening degree of the first outlet (5 1c) by a predetermined ratio and decreasing the opening degree of the second outlet (51d) by the predetermined ratio when the first humidity is higher than the second humidity, and increasing the opening degree of the second outlet (51d) by the predetermined ratio and decreasing the opening degree of the first outlet (51c) by the predetermined ratio when the second humidity is higher than the first humidity.

14. The method of claim 13, wherein the flow path opening ratio adjusting step (S14) comprises an inlet flow path opening ratio adjusting step of increasing the opening degree of the first inlet (51a) by the predetermined ratio and decreasing the opening degree of the second inlet (51b) by the predetermined ratio when the first humidity is higher than the second humidity, and increasing the opening degree of the second inlet (51b) by the predetermined ratio and decreasing the opening degree of the first inlet (51a) by the predetermined ratio when the second humidity is higher than the first humidity.

15. The method of claim 13, further comprising:
after the flow path opening ratio adjusting step (S14), a simultaneous drying processes performing step (S16) of simultaneously supplying the hot air through the first and second outlets (51c, 51d), in a state in which the opening degrees of the first and second inlets (51a, 51b) and the opening degrees of the first and second outlets (51c, 51d) are adjusted by the predetermined ratio, and absorbing at least a part of moisture contained in the hot air recovered through the first and second inlets (51a, 51b);
and preferably the method further comprising:
a simultaneous process performing time determining step (S17) of determining whether a predetermined time has elapsed after simultaneous drying processes are initiated in a state in which the opening degrees of the first and second inlets (51a, 51b) and the opening degrees of the first and second outlets (51c, 51d) are adjusted by the predetermined ratio;
and preferably wherein when the determination result indicates that the predetermined time has elapsed after the simultaneous drying processes are initiated in the simultaneous process performing time determining step (S17), the humidity measuring step (S12), the target humidity reach determining step, the humidity difference value determining step (S13), and the flow path opening ratio adjusting step (S14) are performed again.

## Patentansprüche

1. Integrierte Wäschebehandlungsvorrichtung, aufweisend:
ein Gehäuse (10) mit einem gemeinsamen Aufnahmeraum darin;
ein erstes Wäschebehandlungsmodul (20), das auf einer oberen Seite in dem gemeinsamen Aufnahmeraum angeordnet ist;
ein zweites Wäschebehandlungsmodul (30), das auf einer unteren Seite in dem gemeinsamen Aufnahmeraum angeordnet ist;
ein gemeinsames Trocknungsmodul (50), das konfiguriert ist, Heißluft zu erzeugen und die Heißluft dem ersten Wäschebehandlungsmodul (20) und dem zweiten Wäschebehandlungsmodul (30) durch einen ersten Auslass (51c) und einen zweiten Auslass (51d) hindurch zuzuführen, wobei das gemeinsame Trocknungsmodul (50) konfiguriert ist, zumindest einen Teil von Feuchtigkeit zu absorbieren, die in Heißluft enthalten ist, die von dem ersten Wäschebehandlungsmodul (20) und dem zweiten Wäschebehandlungsmodul (30) her durch einen ersten Einlass (51a) und einen zweiten Einlass (51b) hindurch zurückgeführt wird;
ein Auslassströmungspfad-Umschaltventil (V2), das konfiguriert ist, den ersten Auslass (51c) und/oder den zweiten Auslass (51d) selektiv zu öffnen oder den ersten Auslass (51c) und den zweiten Auslass (51d) gleichzeitig zu öffnen;
ein Einlassströmungspfad-Umschaltventil (V1), das konfiguriert ist, zumindest einen von dem ersten Einlass (51a) und dem zweiten Einlass (51b) selektiv zu öffnen oder den ersten Einlass (51a) und den zweiten Einlass (51b) gleichzeitig zu öffnen;
einen ersten Feuchtigkeitssensor (SH1), der konfiguriert ist, eine erste Feuchtigkeit der durch den ersten Einlass (51a) hindurch zurückgeführten Heißluft zu messen;
einen zweiten Feuchtigkeitssensor (SH2), der konfiguriert ist, eine zweite Feuchtigkeit der durch den zweiten Einlass (51b) hindurch zurückgeführten Heißluft zu messen;
eine Steuerreinheit (70), die mit dem ersten Feuchtigkeitssensor (SH1) und dem zweiten Feuchtigkeitssensor (SH2) elektrisch verbunden ist und konfiguriert ist, ein Steuersignal zum Betätigen des Auslassströmungspfad-Umschaltventils (V2) und des Einlassströmungspfad-Umschaltventils (V1) zu erzeugen,
wobei die Steuereinheit (70) konfiguriert ist, ein mit der von dem ersten Feuchtigkeitssensor (SH1) gemessenen ersten Feuchtigkeit zusammenhängendes Signal und ein mit der von dem zweiten Feuchtigkeitssensor (SH2) gemessenen zweiten Feuchtigkeit zusammenhängendes Signal zu empfangen, während die Heißluft gleichzeitig dem ersten Wäschebehandlungsmodul (20) und dem zweiten Wäschebehandlungsmodul (30) zugeführt wird, und
wobei die Steuereinheit (70) konfiguriert ist, einen Differenzwert zwischen der ersten Feuchtigkeit und der zweiten Feuchtigkeit zu berechnen, wenn die Steuereinheit (70) bestimmt, dass sowohl die erste Feuchtigkeit als auch die zweite Feuchtigkeit eine vorgegebene Sollfeuchtigkeit übersteigen, und, wenn der Differenzwert einen vorgegebenen kritischen Wert übersteigt, die Steuereinheit (70) konfiguriert ist, das Auslassströmungspfad-Umschaltventil (V2) zu betätigen, um Öffnungsgrade des ersten und des zweiten Auslasses (51c, 51d) zu ändern.

2. Integrierte Wäschebehandlungsvorrichtung nach Anspruch 1, ferner aufweisend:
einen Heißluftzuführkanal, umfassend einen ersten Zuführkanal (61), der konfiguriert ist, den ersten Auslass (51c) und das erste Wäschebehandlungsmodul (20) fluidisch zu verbinden, und einen zweiten Zuführkanal (62), der konfiguriert ist, den zweiten Auslass (51d) und das zweite Wäschebehandlungsmodul (30) fluidisch zu verbinden; und
einen Heißluftrückführungskanal, umfassend einen ersten Rückführungskanal (63), der konfiguriert ist, den ersten Einlass (51a) und das erste Wäschebehandlungsmodul (20) fluidisch zu verbinden, und einen zweiten Rückführungskanal (64), der konfiguriert ist, den zweiten Einlass (51b) und das zweite Wäschebehandlungsmodul (30) fluidisch zu verbinden.

3. Integrierte Wäschebehandlungsvorrichtung nach Anspruch 2, wobei der erste Feuchtigkeitssensor (SH1) dem ersten Einlass (51a) benachbart angeordnet und in dem ersten Rückführungskanal (63) installiert ist und der zweite Feuchtigkeitssensor (SH2) dem zweiten Einlass (51b) benachbart angeordnet und in dem zweiten Rückführungskanal (64) installiert ist.

4. Integrierte Wäschebehandlungsvorrichtung nach Anspruch 1, wobei das gemeinsame Trocknungsmodul (50) aufweist:
einen gemeinsamen Kanal (51), der einen Heißluftströmungspfad darin aufweist und den ersten und den zweiten Einlass (51a, 51b) und den ersten und den zweiten Auslass (51c, 51d) aufweist;
eine Heizvorrichtung (53) und ein Gebläse (54), die in dem gemeinsamen Kanal (51) angeordnet sind und konfiguriert sind, zu dem ersten Auslass (51c) und dem zweiten Auslass (51d) auszulassende Heißluft zu erzeugen; und
einen Verflüssiger (52), der konfiguriert ist, zumindest einen Teil von Feuchtigkeit zu absorbieren, die in der durch den ersten Einlass (51a) und den zweiten Einlass (51b) hindurch zurückgeführten Heißluft enthalten ist.

5. Integrierte Wäschebehandlungsvorrichtung nach Anspruch 1, wobei die Steuereinheit (70) konfiguriert ist, die erste Feuchtigkeit und die zweite Feuchtigkeit mit einer vorgegebenen Sollfeuchtigkeit zu vergleichen, bevor sie den Differenzwert zwischen der ersten Feuchtigkeit und der zweiten Feuchtigkeit berechnet, und konfiguriert ist, den Differenzwert zwischen den Feuchtigkeiten zu berechnen, wenn die Steuereinheit (70) bestimmt, dass sowohl die erste Feuchtigkeit als auch die zweite Feuchtigkeit die Sollfeuchtigkeit übersteigen.

6. Integrierte Wäschebehandlungsvorrichtung nach Anspruch 5, wobei die Sollfeuchtigkeit eine relative Feuchtigkeit von 60 % ist;
oder
wobei der vorgegebene kritische Wert eine relative Feuchtigkeit von 10 % ist.

7. Integrierte Wäschebehandlungsvorrichtung nach Anspruch 5, ferner aufweisend:
einen ersten Aktor, der mit der Steuereinheit (70) elektrisch verbunden ist und konfiguriert ist, das Auslassströmungspfad-Umschaltventil (V2) anhand des Steuersignals der Steuereinheit (70) zu betätigen; und
einen zweiten Aktor, der mit der Steuereinheit (70) elektrisch verbunden ist und konfiguriert ist, das Einlassströmungspfad-Umschaltventil (V1) anhand des Steuersignals der Steuereinheit (70) zu betätigen.

8. Integrierte Wäschebehandlungsvorrichtung nach Anspruch 7, wobei die Steuereinheit (70) konfiguriert ist, ein Steuersignal zum Erhöhen des Öffnungsgrads des ersten Auslasses (51c) um ein vorgegebenes Verhältnis und Verringern des Öffnungsgrads des zweiten Auslasses (51d) um das vorgegebene Verhältnis zu erzeugen, wenn die erste Feuchtigkeit höher als die zweite Feuchtigkeit ist, und die Steuereinheit (70) konfiguriert ist, das Steuersignal an den ersten Aktor und den zweiten Aktor zu übertragen, und
wobei die Steuereinheit (70) konfiguriert ist, ein Steuersignal zum Erhöhen des Öffnungsgrads des zweiten Auslasses (51d) um das vorgegebene Verhältnis und Verringern des Öffnungsgrads des ersten Auslasses (51c) um das vorgegebene Verhältnis zu erzeugen, wenn die zweite Feuchtigkeit höher als die erste Feuchtigkeit ist, und die Steuereinheit (70) konfiguriert ist, das Steuersignal an den ersten Aktor und den zweiten Aktor zu übertragen;
und wobei vorzugsweise die Steuereinheit (70) konfiguriert ist, ein Steuersignal zum Erhöhen des Öffnungsgrads des ersten Einlasses (51a) um das vorgegebene Verhältnis und Verringern des Öffnungsgrads des zweiten Einlasses (51b) um das vorgegebene Verhältnis zu erzeugen, wenn die erste Feuchtigkeit höher als zweite Feuchtigkeit ist, und die Steuereinheit (70) konfiguriert ist, das Steuersignal an den ersten Aktor und den zweiten Aktor zu übertragen, und
wobei die Steuereinheit (70) konfiguriert ist, ein Steuersignal zum Erhöhen des Öffnungsgrads des zweiten Einlasses (51b) um das vorgegebene Verhältnis und Verringern des Öffnungsgrads des ersten Einlasses (51a) um das vorgegebene Verhältnis zu erzeugen, wenn die zweite Feuchtigkeit höher als die erste Feuchtigkeit ist, und die Steuereinheit (70) konfiguriert ist, das Steuersignal an den ersten Aktor und den zweiten Aktor zu übertragen.

9. Verfahren zum Steuern einer integrierten Wäschebehandlungsvorrichtung, wobei das Verfahren aufweist:
einen Schritt (S11) gleichzeitiger Trocknungsprozesse zum gleichzeitigen Zuführen von Heißluft durch einen ersten und einen zweiten Auslass (51c, 51d) eines gemeinsamen Trocknungsmoduls (50) hindurch zu einem ersten und einem zweiten Wäschebehandlungsmodul (20, 30), die auf einer oberen bzw. einer unteren Seite in einem gemeinsamen Aufnahmeraum in einem Gehäuse (10) angeordnet sind, und Absorbieren zumindest eines Teils von Feuchtigkeit, die in Heißluft enthalten ist, die von dem ersten und dem zweiten Wäschebehandlungsmodul (20, 30) her durch den ersten und den zweiten Einlass (51a, 51b) des gemeinsamen Trocknungsmoduls (50) hindurch zurückgeführt wird;
einen Feuchtigkeitsmessschritt (S12) zum Messen einer relativen Feuchtigkeit der durch den ersten und den zweiten Einlass (51a, 51b) hindurch zurückgeführten Heißluft;
einen Feuchtigkeitsdifferenzwert-Bestimmungsschritt (S13) zum Berechnen eines Differenzwerts zwischen den gemessenen Feuchtigkeiten und Bestimmen, ob der berechnete Differenzwert einen vorgegebenen kritischen Wert übersteigt; und
einen Strömungspfadöffnungsverhältnis-Einstellschritt (S14) zum Einstellen eines Verhältnisses der dem ersten Wäschebehandlungsmodul (20) und dem zweiten Wäschebehandlungsmodul (30) zugeführten Heißluft durch Ändern von Öffnungsgraden des ersten und des zweiten Auslasses (51c, 51d), wenn der Differenzwert den vorgegebenen kritischen Wert übersteigt, und
wobei der Feuchtigkeitsmessschritt (S12) konfiguriert ist, eine erste Feuchtigkeit von aus dem ersten Wäschebehandlungsmodul (20) ausgelassener Heißluft und eine zweite Feuchtigkeit von aus dem zweiten Wäschebehandlungsmodul (30) ausgelassener Heißluft mit einer vorgegebenen Sollfeuchtigkeit zu vergleichen.

10. Verfahren nach Anspruch 9, wobei der Feuchtigkeitsmessschritt (S12) aufweist:
einen ersten Feuchtigkeitsmessschritt zum Messen einer ersten Feuchtigkeit von aus dem ersten Wäschebehandlungsmodul (20) ausgelassender Heißluft durch Verwenden eines dem ersten Einlass (51a) benachbart angeordneten ersten Feuchtigkeitssensors (SH1); und
einen zweiten Feuchtigkeitsmessschritt zum Messen einer zweiten Feuchtigkeit von aus dem zweiten Wäschebehandlungsmodul (30) ausgelassener Heißluft durch Verwenden eines dem zweiten Einlass (51b) benachbart angeordneten zweiten Feuchtigkeitssensors (SH2).

11. Verfahren nach Anspruch 10, wobei der Feuchtigkeitsmessschritt (S12) ferner einen Sollfeuchtigkeitserreichen-Bestimmungsschritt zum Vergleichen der ersten Feuchtigkeit und der zweiten Feuchtigkeit mit einer vorgegebenen Sollfeuchtigkeit und Bestimmen, ob die erste Feuchtigkeit und die zweite Feuchtigkeit gleich oder geringer als die Sollfeuchtigkeit sind, aufweist;
und wobei vorzugsweise der Feuchtigkeitsdifferenzwert-Bestimmungsschritt (S13) ausgeführt wird, wenn das Bestimmungsresultat angibt, dass sowohl die erste Feuchtigkeit als auch die zweite Feuchtigkeit die Sollfeuchtigkeit übersteigen.

12. Verfahren nach Anspruch 10, wobei die Sollfeuchtigkeit eine relative Feuchtigkeit von 60 % ist;
oder
wobei der vorgegebene kritische Wert eine relative Feuchtigkeit von 10 % ist.

13. Verfahren nach Anspruch 11, wobei der Strömungspfadöffnungsverhältnis-Einstellschritt (S14) einen Auslassströmungspfadöffnungsverhältnis-Einstellschritt zum Erhöhen des Öffnungsgrads des ersten Auslasses (51c) um ein vorgegebenes Verhältnis und Verringern des Öffnungsgrads des zweiten Auslasses (51d) um das vorgegebene Verhältnis, wenn die erste Feuchtigkeit höher als die zweite Feuchtigkeit ist, und Erhöhen des Öffnungsgrads des zweiten Auslasses (51d) um das vorgegebene Verhältnis und Verringern des Öffnungsgrads des ersten Auslasses (51c) um das vorgegebene Verhältnis, wenn die zweite Feuchtigkeit höher als die erste Feuchtigkeit ist, aufweist.

14. Verfahren nach Anspruch 13, wobei der Strömungspfadöffnungsverhältnis-Einstellschritt (S14) einen Einlassströmungspfadöffnungsverhältnis-Einstellschritt zum Erhöhen des Öffnungsgrads des ersten Einlasses (51a) um das vorgegebene Verhältnis und Verringern des Öffnungsgrads des zweiten Einlasses (51b) um das vorgegebene Verhältnis, wenn die erste Feuchtigkeit höher als die zweite Feuchtigkeit ist, und Erhöhen des Öffnungsgrads des zweiten Einlasses (51b) um das vorgegebene Verhältnis und Verringern des Öffnungsgrads des ersten Einlasses (51a) um das vorgegebene Verhältnis, wenn die zweite Feuchtigkeit höher als die erste Feuchtigkeit ist, aufweist.

15. Verfahren nach Anspruch 13, ferner aufweisend:
nach dem Strömungspfadöffnungsverhältnis-Einstellschritt (S14), einen Ausführschritt (S16) gleichzeitiger Trocknungsprozesse zum gleichzeitigen Zuführen der Heißluft durch den ersten und den zweiten Auslass (51c, 51d) hindurch in einem Zustand, in dem die Öffnungsgrade des ersten und des zweiten Einlasses (51a, 51b) und die Öffnungsgrade des ersten und des zweiten Auslasses (51c, 51d) um das vorgegebene Verhältnis eingestellt sind, und Absorbieren zumindest eines Teils von Feuchtigkeit, die in der durch den ersten und den zweiten Einlass (51a, 51b) hindurch zurückgeführten Heißluft enthalten ist; und
wobei das Verfahren vorzugsweise ferner aufweist:
einen Ausführzeit-Bestimmungsschritt (S17) gleichzeitiger Prozesse zum Bestimmen, ob eine vorgegebene Zeit verstrichen ist, nachdem in einem Zustand, in dem die Öffnungsgrade des ersten und des zweiten Einlasses (51a, 51b) und der Öffnungsgrade des ersten und des zweiten Auslasses (51c, 51d) um das vorgegebene Verhältnis eingestellt sind, gleichzeitige Trocknungsprozesse ausgelöst sind;
und wobei vorzugsweise, wenn in dem Ausführzeit-Bestimmungsschritt (S17) gleichzeitiger Prozesse das Bestimmungsresultat angibt, dass die vorgegebene Zeit verstrichen ist, nachdem die gleichzeitigen Trocknungsprozesse ausgelöst sind, der Feuchtigkeitsmessschritt (S12), der Sollfeuchtigkeitserreichen-Bestimmungsschritt, der Feuchtigkeitsdifferenzwert-Bestimmungsschritt (S13) und der Strömungspfadöffnungsverhältnis-Einstellschritt (S14) erneut ausgeführt werden.

## Revendications

1. Appareil de traitement de linge intégré comprenant :
une carrosserie (10) présentant un espace de logement commun à l'intérieur ;
un premier module de traitement de linge (20) disposé sur un côté supérieur dans l'espace de logement commun ;
un deuxième module de traitement de linge (30) disposé sur un côté inférieur dans l'espace de logement commun ;
un module de séchage commun (50) configuré pour produire de l'air chaud et fournir l'air chaud au premier module de traitement de linge (20) et au deuxième module de traitement de linge (30) par une première sortie (51c) et une deuxième sortie (51d), le module de séchage commun (50) étant configuré pour absorber au moins une partie de l'humidité contenue dans l'air chaud récupéré du premier module de traitement de linge (20) et du deuxième module de traitement de linge (30) par une première entrée (51a) et une deuxième entrée (51b) ;
une soupape de commutation de trajet d'écoulement de sortie (V2) configurée pour ouvrir au choix au moins une de la première sortie (5 1c) et de la deuxième sortie (51d) ou ouvrir simultanément la première sortie (5 1c) et la deuxième sortie (5 1d) ;
une soupape de commutation de trajet d'écoulement d'entrée (V1) configurée pour ouvrir au choix au moins une de la première entrée (51a) et de la deuxième entrée (51b) ou ouvrir simultanément la première entrée (51a) et la deuxième entrée (51b) ;
un premier capteur d'humidité (SH1) configuré pour mesurer une première humidité de l'air chaud récupéré par la première entrée (51a) ;
un deuxième capteur d'humidité (SH2) configuré pour mesurer une deuxième humidité de l'air chaud récupéré par la deuxième entrée (51b) ; et
une unité de commande (70) raccordée électriquement au premier capteur d'humidité (SH1) et au deuxième capteur d'humidité (SH2) et configurée pour produire un signal de commande pour faire fonctionner la soupape de commutation de trajet d'écoulement de sortie (V2) et la soupape de commutation de trajet d'écoulement d'entrée (V1),
dans lequel l'unité de commande (70) est configurée pour recevoir un signal lié à la première humidité mesurée par le premier capteur d'humidité (SH1) et un signal lié à la deuxième humidité mesurée par le deuxième capteur d'humidité (SH2), tandis que l'air chaud est simultanément fourni au premier module de traitement de linge (20) et au deuxième module de traitement de linge (30), et
dans lequel l'unité de commande (70) est configurée pour calculer une valeur de différence entre la première humidité et la deuxième humidité, lorsque l'unité de commande (70) détermine qu'à la fois la première humidité et la deuxième humidité dépassent une humidité cible prédéterminée, et lorsque la valeur de différence dépasse une valeur critique prédéterminée, l'unité de commande (70) est configurée pour faire fonctionner la soupape de commutation de trajet d'écoulement de sortie (V2) pour modifier des degrés d'ouverture des première et deuxième sorties (51c, 51d).

2. Appareil de traitement de linge intégré selon la revendication 1, comprenant en outre :
un conduit d'alimentation en air chaud comprenant un premier conduit d'alimentation (61) configuré pour raccorder fluidiquement la première sortie (51c) et le premier module de traitement de linge (20), et un deuxième conduit d'alimentation (62) configuré pour raccorder fluidiquement la deuxième sortie (51d) et le deuxième module de traitement de linge (30) ; et
un conduit de récupération d'air chaud comprenant un premier conduit de récupération (63) configuré pour raccorder fluidiquement la première entrée (51a) et le premier module de traitement de linge (20), un deuxième conduit de récupération (64) configuré pour raccorder fluidiquement la deuxième entrée (51b) et le deuxième module de traitement de linge (30).

3. Appareil de traitement de linge intégré selon la revendication 2, dans lequel le premier capteur d'humidité (SH1) est disposé de manière adjacente à la première entrée (51a) et est installé dans le premier conduit de récupération (63), et le deuxième capteur d'humidité (SH2) est disposé de manière adjacente à la deuxième entrée (51b) et est installé dans le deuxième conduit de récupération (64).

4. Appareil de traitement de linge intégré selon la revendication 1, dans lequel le module de séchage commun (50) comprend :
un conduit commun (51) présentant un trajet d'écoulement d'air chaud à l'intérieur et présentant les première et deuxième entrées (51a, 51b) et les première et deuxième sorties (51c, 51d) ;
un dispositif de chauffage (53) et un ventilateur soufflant (54) disposés dans le conduit commun (51) et configurés pour produire de l'air chaud devant être évacué vers la première sortie (51c) et la deuxième sortie (51d) ; et
un condenseur (52) configuré pour absorber au moins une partie de l'humidité contenue dans l'air chaud récupéré par la première entrée (51a) et la deuxième entrée (51b).

5. Appareil de traitement de linge intégré selon la revendication 1, dans lequel l'unité de commande (70) est configurée pour comparer la première humidité et la deuxième humidité à une humidité cible prédéterminée avant de calculer la valeur de différence entre la première humidité et la deuxième humidité, et est configurée pour calculer la valeur de différence entre les humidités lorsque l'unité de commande (70) détermine qu'à la fois la première humidité et la deuxième humidité dépassent l'humidité cible.

6. Appareil de traitement de linge intégré selon la revendication 5, dans lequel l'humidité cible est une humidité relative de 60 % ;
ou
dans lequel la valeur critique prédéterminée est une humidité relative de 10 %.

7. Appareil de traitement de linge intégré selon la revendication 5, comprenant en outre :
un premier actionneur raccordé électriquement à l'unité de commande (70) et configuré pour faire fonctionner la soupape de commutation de trajet d'écoulement de sortie (V2) sur la base du signal de commande de l'unité de commande (70) ; et
un deuxième actionneur raccordé électriquement à l'unité de commande (70) et configuré pour faire fonctionner la soupape de commutation de trajet d'écoulement d'entrée (V1) sur la base du signal de commande de l'unité de commande (70).

8. Appareil de traitement de linge intégré selon la revendication 7, dans lequel l'unité de commande (70) est configurée pour produire un signal de commande pour augmenter le degré d'ouverture de la première sortie (51c) d'un rapport prédéterminé et pour diminuer le degré d'ouverture de la deuxième sortie (51d) du rapport prédéterminé lorsque la première humidité est supérieure à la deuxième humidité, et l'unité de commande (70) est configurée pour transmettre le signal de commande au premier actionneur et au deuxième actionneur, et
dans lequel l'unité de commande (70) est configurée pour produire un signal de commande pour augmenter le degré d'ouverture de la deuxième sortie (51d) du rapport prédéterminé et pour diminuer le degré d'ouverture de la première sortie (51c) du rapport prédéterminé lorsque la deuxième humidité est supérieure à la première humidité, et l'unité de commande (70) est configurée pour transmettre le signal de commande au premier actionneur et au deuxième actionneur ;
et de préférence dans lequel l'unité de commande (70) est configurée pour produire un signal de commande pour augmenter le degré d'ouverture de la première entrée (51a) du rapport prédéterminé et pour diminuer le degré d'ouverture de la deuxième entrée (51b) du rapport prédéterminé lorsque la première humidité est supérieure à la deuxième humidité, et l'unité de commande (70) est configurée pour transmettre le signal de commande au premier actionneur et au deuxième actionneur, et
dans lequel l'unité de commande (70) est configurée pour produire un signal de commande pour augmenter le degré d'ouverture de la deuxième entrée (51b) du rapport prédéterminé et pour diminuer le degré d'ouverture de la première entrée (51a) du rapport prédéterminé lorsque la deuxième humidité est supérieure à la première humidité, et l'unité de commande (70) est configurée pour transmettre le signal de commande au premier actionneur et au deuxième actionneur.

9. Procédé de commande d'un appareil de traitement de linge intégré, le procédé comprenant :
une étape de processus de séchage simultanés (S11) de fourniture simultanée d'air chaud par des première et deuxième sorties (51c, 51d) d'un module de séchage commun (50) à des premier et deuxième modules de traitement de linge (20, 30) disposés respectivement sur les côtés supérieur et inférieur dans un espace de logement commun dans une carrosserie (10) et d'absorption d'au moins une partie de l'humidité contenue dans l'air chaud récupéré par des première et deuxième entrées (51a, 51b) du module de séchage commun (50) à partir des premier et deuxième modules de traitement de linge (20, 30) ;
une étape de mesure de l'humidité (S12) de mesure d'une humidité relative de l'air chaud récupéré par les première et deuxième entrées (51a, 51b) ;
une étape de détermination de valeur de différence d'humidité (S13) de calcul d'une valeur de différence entre les humidités mesurées et de détermination si la valeur de différence calculée dépasse une valeur critique prédéterminée ; et
une étape d'ajustement du rapport d'ouverture de trajet d'écoulement (S14) d'ajustement d'un rapport de l'air chaud à fournir au premier module de traitement de linge (20) et au deuxième module de traitement de linge (30) en modifiant des degrés d'ouverture des première et deuxième sorties (51c, 51d) lorsque la valeur de différence dépasse la valeur critique prédéterminée, et
dans lequel l'étape de mesure d'humidité (S12) est configurée pour comparer une première humidité de l'air chaud évacué du premier module de traitement du linge (20) et une deuxième humidité de l'air chaud évacué du deuxième module de traitement du linge (30) à une humidité cible prédéterminée.

10. Procédé selon la revendication 9, dans lequel l'étape de mesure de l'humidité (S12) comprend :
une première étape de mesure d'humidité de mesure d'une première humidité de l'air chaud évacué du premier module de traitement de linge (20) en utilisant un premier capteur d'humidité (SH1) disposé de manière adjacente à la première entrée (51a) ; et
une deuxième étape de mesure d'humidité de mesure d'une deuxième humidité de l'air chaud évacué du deuxième module de traitement de linge (30) en utilisant un deuxième capteur d'humidité (SH2) disposé de manière adjacente à la deuxième entrée (51b).

11. Procédé selon la revendication 10, dans lequel l'étape de mesure d'humidité (S12) comprend en outre une étape de détermination d'atteinte d'humidité cible de comparaison de la première humidité et de la deuxième humidité à une humidité cible prédéterminée et de détermination si la première humidité et la deuxième humidité sont inférieures ou égales à l'humidité cible ;
et de préférence dans lequel l'étape de détermination de valeur de différence d'humidité (S13) est réalisée lorsque le résultat de détermination indique que la première humidité et la deuxième humidité dépassent l'humidité cible.

12. Procédé selon la revendication 10, dans lequel l'humidité cible est une humidité relative de 60 % ;
ou
dans lequel la valeur critique prédéterminée est une humidité relative de 10 %.

13. Procédé selon la revendication 11, dans lequel l'étape d'ajustement de rapport d'ouverture de trajet d'écoulement (S14) comprend une étape d'ajustement de rapport d'ouverture de trajet d'écoulement de sortie d'augmentation du degré d'ouverture de la première sortie (51c) d'un rapport prédéterminé et de diminution du degré d'ouverture de la deuxième sortie (51d) du rapport prédéterminé lorsque la première humidité est supérieure à la deuxième humidité, et d'augmenter du degré d'ouverture de la deuxième sortie (5 1d) du rapport prédéterminé et de diminution du degré d'ouverture de la première sortie (51c) du rapport prédéterminé lorsque la deuxième humidité est supérieure à la première humidité.

14. Procédé selon la revendication 13, dans lequel l'étape d'ajustement du rapport d'ouverture de trajet d'écoulement (S14) comprend une étape d'ajustement du rapport d'ouverture de trajet d'écoulement d'entrée d'augmentation du degré d'ouverture de la première entrée (51a) du rapport prédéterminé et de diminution du degré d'ouverture de la deuxième entrée (51b) du rapport prédéterminé lorsque la première humidité est supérieure à la deuxième humidité, et d'augmentation du degré d'ouverture de la deuxième entrée (51b) du rapport prédéterminé et de diminution du degré d'ouverture de la première entrée (51a) du rapport prédéterminé lorsque la deuxième humidité est supérieure à la première humidité.

15. Procédé selon la revendication 13, comprenant en outre :
après l'étape d'ajustement du rapport d'ouverture de trajet d'écoulement (S14), une étape de processus de séchage simultané (S16) de fourniture simultanée de l'air chaud à travers les première et deuxième sorties (51c, 51d), dans un état dans lequel les degrés d'ouverture des première et deuxième entrées (51a, 51b) et les degrés d'ouverture des première et deuxième sorties (51c, 51d) sont ajustés du rapport prédéterminé, et d'absorption d'au moins une partie de l'humidité contenue dans l'air chaud récupéré par les première et deuxième entrées (51a, 51b) ;
et de préférence le procédé comprenant en outre :
une étape de détermination de durée d'exécution du processus simultané (S17) de détermination si une durée prédéterminée s'est écoulée après que les processus de séchage simultanés ont commencé dans un état dans lequel les degrés d'ouverture des première et deuxième entrées (51a, 51b) et les degrés d'ouverture des première et deuxième sorties (51c, 51d) sont ajustés du rapport prédéterminé ;
et de préférence dans lequel lorsque le résultat de détermination indique que la durée prédéterminée s'est écoulée après que les processus de séchage simultanés ont été commencés dans l'étape de détermination de durée d'exécution de processus simultané (S17), l'étape de mesure d'humidité (S12), l'étape de détermination d'atteinte d'humidité cible, l'étape de détermination de valeur de différence d'humidité (S13), et l'étape d'ajustement de rapport d'ouverture de trajet d'écoulement (S 14) sont réalisées à nouveau.
